(19) Europäisches Patentamt
European Patent Office
Office européen des brevets

(11) **EP 4 436 083 A1**

(12) **EUROPEAN PATENT APPLICATION**
published in accordance with Art. 153(4) EPC

(43) Date of publication:
**25.09.2024 Bulletin 2024/39**

(21) Application number: **22909926.2**

(22) Date of filing: **19.12.2022**

(51) International Patent Classification (IPC):
**H04L 5/00** *(2006.01)*     **H04L 1/00** *(2006.01)*

(52) Cooperative Patent Classification (CPC):
**H04L 1/00; H04L 5/00; H04L 25/03**

(86) International application number:
**PCT/CN2022/139956**

(87) International publication number:
**WO 2023/116613 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2021 CN 202111567396**

(71) Applicant: **Huawei Technologies Co., Ltd.**
**Shenzhen, Guangdong 518129 (CN)**

(72) Inventors:
• **MA, Qianli**
  **Shenzhen, Guangdong 518129 (CN)**
• **HUANG, Huang**
  **Shenzhen, Guangdong 518129 (CN)**
• **GAO, Kuandong**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS**

(57)   This application provides a communication method and apparatus, and relates to the field of communication technologies, to improve data transmission efficiency and spectral efficiency. The method includes: A first device obtains a first signal and a second signal based on offset quadrature amplitude modulation OQAM, and the first device sends the first signal and the second signal. First data is carried in the first signal, second data is carried in the second signal, and a parameter corresponding to a modulation and coding scheme MCS of the first data is different from a parameter corresponding to an MCS of the second data.

FIG. 13

**Description**

This application claims priority to Chinese Patent Application No. 202111567396.4, filed with the China National Intellectual Property Administration on December 20, 2021 and entitled "COMMUNICATION METHOD AND APPARATUS", which is incorporated herein by reference in its entirety.

**TECHNICAL FIELD**

This application relates to the communication field, and in particular, to a communication method and apparatus.

**BACKGROUND**

Currently, phase noise (phase noise, PHN) measurement, or phase noise compensation, is a very important step in a signal transmission process, and can reduce phase noise interference, avoid signal distortion, and improve signal transmission reliability. Specifically, a transmit end can place a plurality of reference signals (for example, a reference signal 1 and a reference signal 2) at consecutive time domain positions, and modulate the reference signal 1 to generate interference of a fixed magnitude to the reference signal 2. In this way, after receiving these pilots, a receive end can implement phase noise compensation based on the interference of the fixed magnitude.

However, the reference signal 1 is merely used to generate the interference of the fixed magnitude to the reference signal 2, and cannot improve data transmission efficiency and spectral efficiency.

**SUMMARY**

Embodiments of this application provide a communication method and apparatus, to improve data transmission efficiency and spectral efficiency.

The following technical solutions are used in this application.

According to a first aspect, a communication method is provided. The method includes: A first device obtains a first signal and a second signal based on offset quadrature amplitude modulation OQAM, and sends the first signal and the second signal. First data is carried in the first signal, second data is carried in the second signal, and a parameter corresponding to a modulation and coding scheme MCS of the first data is different from a parameter corresponding to an MCS of the second data.

It can be learned from the method according to the first aspect that, on the basis that the first data is carried in the first signal and the second data is carried in the second signal, the parameter corresponding to the MCS of the first data is different from the parameter corresponding to the MCS of the second data, indicating that one of the first signal and the second signal is a reference signal and the other is a data signal, so that data is transmitted based on the reference signal, and data transmission efficiency and spectral efficiency are improved.

In a possible design solution, the first data is carried in the first signal based on a time domain position of the first signal. Optionally, the first data may alternatively be carried in the first signal based on at least one of the following: a polarity or an amplitude of the first signal. In other words, the first data may be carried in the first signal based on a characteristic of the first signal, for example, the polarity or the amplitude, or may be carried in the first signal based on the time domain position of the first signal, to further improve the data transmission efficiency and the spectral efficiency. The time domain position of the first signal may be a relative time domain position. For example, when the first signal is a compensation signal in a reference signal, a time domain position of the compensation signal is a time domain position relative to a redundant signal (a signal that generates an interference signal) in the reference signal. Alternatively, the time domain position of the first signal may be an absolute time domain position. This is not specifically limited in this application.

In a possible design solution, the parameter corresponding to the MCS of the first data may be determined based on at least one of the following: a parameter of the first data, a parameter of the first signal, a parameter of the second signal, or the parameter corresponding to the MCS of the second data. In other words, there is no need for the first device to additionally indicate the parameter corresponding to the MCS of the first data, to reduce signaling overheads and improve communication efficiency.

Optionally, the parameter corresponding to the MCS of the first data may be less than the parameter corresponding to the MCS of the second data. Because the reference signal is further used for phase noise compensation, an MCS corresponding to the reference signal is usually less than an MCS corresponding to the data signal. For example, the parameter corresponding to the MCS of the first data is less than the parameter corresponding to the MCS of the second data, to ensure accuracy of phase noise compensation.

Optionally, the parameter of the first signal may include one or more of the following: a frequency domain density of the first signal, a time domain density of the first signal, a power of the first signal, a quantity of first signals, or a quantity of first signal blocks, where the first signal block includes the first signal, to ensure that a second device can accurately determine the parameter corresponding to the MCS of the first data.

Optionally, the parameter of the second signal may include one or more of the following: a quantity of resources corresponding to the second signal or a power of the second signal, to ensure that the second device can accurately determine the parameter corresponding to the MCS of the first data.

In a possible design solution, the parameter corresponding to the MCS of the first data includes at least one of the following: a modulation order, a code rate, or spectral efficiency.

Optionally, the modulation order may include one or more of the following: binary phase shift keying BPSK, quadrature phase shift keying QPSK, 8 phase shift keying 8PSK, or 16 quadrature amplitude modulation QAM, so that the first device can select a modulation order suitable for a current service, to ensure stability and reliability of the service.

Optionally, the code rate may include 1, that is, no coding is performed, to further improve the data transmission efficiency.

In a possible design solution, the method according to the first aspect may further include: The first device sends first information, where the first information indicates the parameter corresponding to the MCS of the first data. In this way, there is no need for the second device to determine the parameter corresponding to the MCS of the first data, so that running efficiency of the second device can be improved.

Optionally, the first information is carried in one or more of the following: a radio resource control RRC message, a downlink control information DCI message, or a media access control-control element MAC-CE message, to implement signaling reusing, reduce communication overheads, and improve the communication efficiency.

According to a second aspect, a communication method is provided. The method includes: A second device receives a first signal and a second signal, and demodulates the first signal and the second signal. The first signal and the second signal are signals obtained based on OQAM, first data is carried in the first signal, second data is carried in the second signal, and a parameter corresponding to an MCS of the first data is different from a parameter corresponding to an MCS of the second data.

In a possible design solution, the first data is carried in the first signal based on a time domain position of the first signal. Optionally, the first data may alternatively be carried in the first signal based on at least one of the following: a polarity or an amplitude of the first signal.

In a possible design solution, the parameter corresponding to the MCS of the first data may be determined based on at least one of the following: a parameter of the first data, a parameter of the first signal, a parameter of the second signal, or the parameter corresponding to the MCS of the second data.

Optionally, the parameter corresponding to the MCS of the first data may be less than the parameter corresponding to the MCS of the second data.

Optionally, the parameter of the first signal may include one or more of the following: a frequency domain density of the first signal, a time domain density of the first signal, a power of the first signal, a quantity of first signals, or a quantity of first signal blocks, where the first signal block includes the first signal.

Optionally, the parameter of the second signal may include one or more of the following: a quantity of resources corresponding to the second signal or a power of the second signal.

In a possible design solution, the parameter corresponding to the MCS of the first data includes at least one of the following: a modulation order, a code rate, or spectral efficiency.

Optionally, the modulation order may include one or more of the following: BPSK, QPSK, 8PSK, or 16QAM.

Optionally, the code rate may include 1.

In a possible design solution, the method according to the second aspect may further include: The second device receives first information, where the first information indicates the parameter corresponding to the MCS of the first data.

Optionally, the first information is carried in one or more of the following: an RRC message, a DCI message, or a MAC-CE message.

In addition, for other technical effects of the method according to the second aspect, refer to the technical effects of the method according to the first aspect. Details are not described herein again.

According to a third aspect, a communication apparatus is provided. The apparatus includes: a processing module and a transceiver module. The processing module is configured to obtain a first signal and a second signal based on OQAM. The transceiver module is configured to send the first signal and the second signal. First data is carried in the first signal, second data is carried in the second signal, and a parameter corresponding to an MCS of the first data is different from a parameter corresponding to an MCS of the second data.

In a possible design solution, the first data is carried in the first signal based on a time domain position of the first signal. Optionally, the first data may alternatively be carried in the first signal based on at least one of the following: a polarity or an amplitude of the first signal.

In a possible design solution, the parameter corresponding to the MCS of the first data may be determined based on at least one of the following: a parameter of the first data, a parameter of the first signal, a parameter of the second signal, or the parameter corresponding to the MCS of the second data.

Optionally, the parameter corresponding to the MCS of the first data may be less than the parameter corresponding to the MCS of the second data.

Optionally, the parameter of the first signal may include one or more of the following: a frequency domain density of the first signal, a time domain density of the first signal, a power of the first signal, a quantity of first signals, or a quantity of first signal blocks, where the first signal block includes the first signal.

Optionally, the parameter of the second signal may include one or more of the following: a quantity of resources corresponding to the second signal or a power of the second signal.

In a possible design solution, the parameter corresponding to the MCS of the first data includes at least one of the following: a modulation order, a code rate, or spectral efficiency.

Optionally, the modulation order may include one or more of the following: BPSK, QPSK, 8PSK, or 16QAM.

Optionally, the code rate may include 1.

In a possible design solution, the transceiver module is further configured to send first information, and the first information indicates the parameter corresponding to the MCS of the first data.

Optionally, the first information is carried in one or more of the following: an RRC message, a DCI message, or a MAC-CE message.

Optionally, the transceiver module may alternatively include a sending module and a receiving module. The sending module is configured to implement a sending function of the apparatus according to the third aspect, and the receiving module is configured to implement a receiving function of the apparatus according to the third aspect.

Optionally, the apparatus according to the third aspect may further include a storage module, and the storage module stores a program or instructions. When the processing module executes the program or the instructions, the apparatus is enabled to perform the method according to the first aspect.

It should be noted that the apparatus according to the third aspect may be a terminal or a network device, may be a chip (system) or another part or component that can be disposed in a terminal or a network device, or may be an apparatus that includes a terminal or a network device. This is not limited in this application.

In addition, for technical effects of the apparatus according to the third aspect, refer to the technical effects of the method according to the first aspect. Details are not described herein again.

According to a fourth aspect, a communication apparatus is provided. The apparatus includes: a processing module and a transceiver module. The transceiver module is configured to receive a first signal and a second signal. The processing module is configured to demodulate the first signal and the second signal. The first signal and the second signal are signals obtained based on OQAM, first data is carried in the first signal, second data is carried in the second signal, and a parameter corresponding to an MCS of the first data is different from a parameter corresponding to an MCS of the second data.

In a possible design solution, the first data is carried in the first signal based on a time domain position of the first signal. Optionally, the first data may alternatively be carried in the first signal based on at least one of the following: a polarity or an amplitude of the first signal.

In a possible design solution, the parameter corresponding to the MCS of the first data may be determined based on at least one of the following: a parameter of the first data, a parameter of the first signal, a parameter of the second signal, or the parameter corresponding to the MCS of the second data.

Optionally, the parameter corresponding to the MCS of the first data may be less than the parameter corresponding to the MCS of the second data.

Optionally, the parameter of the first signal may include one or more of the following: a frequency domain density of the first signal, a time domain density of the first signal, a power of the first signal, a quantity of first signals, or a quantity of first signal blocks, where the first signal block includes the first signal.

Optionally, the parameter of the second signal may include one or more of the following: a quantity of resources corresponding to the second signal or a power of the second signal.

In a possible design solution, the parameter corresponding to the MCS of the first data includes at least one of the following: a modulation order, a code rate, or spectral efficiency.

Optionally, the modulation order may include one or more of the following: BPSK, QPSK, 8PSK, or 16QAM.

Optionally, the code rate may include 1.

In a possible design solution, the transceiver module is further configured to receive first information, and the first information indicates the parameter corresponding to the MCS of the first data.

Optionally, the first information is carried in one or more of the following: an RRC message, a DCI message, or a MAC-CE message.

Optionally, the transceiver module may alternatively include a sending module and a receiving module. The sending module is configured to implement a sending function of the apparatus according to the fourth aspect, and the receiving module is configured to implement a receiving function of the apparatus according to the fourth aspect.

Optionally, the apparatus according to the fourth aspect may further include a storage module, and the storage module stores a program or instructions. When the processing module executes the program or the instructions, the apparatus is enabled to perform the method according to the second aspect.

It should be noted that the apparatus according to the fourth aspect may be a terminal or a network device, may be a chip (system) or another part or component that can be disposed in a terminal or a network device, or may be an apparatus that includes a terminal or a network device. This is not limited in this application.

In addition, for technical effects of the apparatus according to the fourth aspect, refer to the technical effects of the method according to the second aspect. Details are not described herein again.

According to a fifth aspect, a communication apparatus is provided. The apparatus includes a processor. The processor is configured to perform the method according to the first aspect or the second aspect.

In a possible design solution, the apparatus according to the fifth aspect may further include a transceiver. The transceiver may be a transceiver circuit or an interface circuit. The transceiver may be used by the apparatus to communicate with another apparatus.

In a possible design solution, the apparatus according to the fifth aspect may further include a memory. The memory and the processor may be integrated together, or may be disposed separately. The memory may be configured to store a computer program and/or data related to the method according to the first aspect or the second aspect.

In this application, the apparatus according to the fifth aspect may be the terminal or the network device in the first aspect or the second aspect, for example, the first device or the second device, may be a chip (system) or another part or component that can be disposed in the terminal or the network device, or may be an apparatus that includes the terminal or the network device.

In addition, for technical effects of the apparatus according to the fifth aspect, refer to the technical effects of the method according to the first aspect or the second aspect. Details are not described herein again.

According to a sixth aspect, a communication apparatus is provided. The apparatus includes a processor and a memory. The memory is configured to store computer instructions. When the processor executes the instructions, the apparatus is enabled to perform the method according to the first aspect or the second aspect.

In a possible design solution, the apparatus according to the sixth aspect may further include a transceiver. The transceiver may be a transceiver circuit or an interface circuit. The transceiver may be used by the apparatus to communicate with another apparatus.

In this application, the apparatus according to the sixth aspect may be the terminal or the network device in the first aspect or the second aspect, for example, the first device or the second device, may be a chip (system) or another part or component that can be disposed in the terminal or the network device, or may be an apparatus that includes the terminal or the network device.

In addition, for technical effects of the apparatus according to the sixth aspect, refer to the technical effects of the method according to the first aspect or the second aspect. Details are not described herein again.

According to a seventh aspect, a communication apparatus is provided. The apparatus includes a logic circuit and an input/output interface. The input/output interface is configured to receive code instructions and transmit the code instructions to the logic circuit. The logic circuit is configured to run the code instructions to perform the method according to the first aspect or the second aspect.

In this application, the apparatus according to the seventh aspect may be the terminal or the network device in the first aspect or the second aspect, for example, the first device or the second device, may be a chip (system) or another part or component that can be disposed in the terminal or the network device, or may be an apparatus that includes the terminal or the network device.

In addition, for technical effects of the apparatus according to the seventh aspect, refer to the technical effects of the method according to the first aspect or the second aspect. Details are not described herein again.

According to an eighth aspect, a communication apparatus is provided. The apparatus includes a processor and a transceiver. The transceiver is used by the communication apparatus to exchange information with another apparatus. The processor executes program instructions to perform the method according to the first aspect or the second aspect.

In a possible design solution, the apparatus according to the eighth aspect may further include a memory. The memory and the processor may be integrated together, or may be disposed separately. The memory may be configured to store a computer program and/or data related to the method according to the first aspect or the second aspect.

In this application, the apparatus according to the eighth aspect may be the terminal or the network device in the first aspect or the second aspect, for example, the first device or the second device, may be a chip (system) or another part or component that can be disposed in the terminal or the network device, or may be an apparatus that includes the terminal or the network device.

In addition, for technical effects of the apparatus according to the eighth aspect, refer to the technical effects of the method according to the first aspect or the second aspect. Details are not described herein again.

According to a ninth aspect, a communication system is provided. The communication system includes one or more first devices and one or more second devices. The first device is configured to perform the method according to the first aspect, and the second device is configured to perform the method according to the second aspect.

According to a tenth aspect, a computer-readable storage medium is provided, including a computer program or instructions. When the computer program or the instructions are run on a computer, the computer is enabled to perform the method according to the first aspect or the second aspect.

According to an eleventh aspect, a computer program product is provided, including a computer program or instructions. When the computer program or the instructions are run on a computer, the computer is enabled to perform the method according to the first aspect or the second aspect.

## BRIEF DESCRIPTION OF DRAWINGS

FIG. 1 is a schematic diagram of grouping PTRSs and data;
FIG. 2 is a schematic diagram of waveforms of multi-carrier signals;
FIG. 3 is a schematic flowchart of time domain implementation of SC-OQAM;
FIG. 4 is a schematic diagram of a waveform in SC-OQAM;
FIG. 5 is a schematic flowchart of frequency domain implementation of SC-OQAM;
FIG. 6 is a schematic flowchart of frequency-domain filtering;
FIG. 7 is a schematic diagram 1 of a position of a reference signal in SC-OQAM;
FIG. 8 is a schematic diagram 2 of a position of a reference signal in SC-OQAM;
FIG. 9 is a schematic diagram 3 of a position of a reference signal in SC-OQAM;
FIG. 10 is a schematic diagram 4 of a position of a reference signal in SC-OQAM;
FIG. 11 is a schematic diagram of a position of a reference signal of UE;
FIG. 12 is a schematic diagram of an architecture of a communication system according to an embodiment of this application;
FIG. 13 is a schematic flowchart of a communication method according to an embodiment of this application;
FIG. 14 is a schematic diagram of a position of a reference signal in a communication method according to an embodiment of this application;
FIG. 15 is a schematic diagram 1 of a structure of a communication apparatus according to an embodiment of this application;
FIG. 16 is a schematic diagram 2 of a structure of a communication apparatus according to an embodiment of this application; and
FIG. 17 is a schematic diagram 3 of a structure of a communication apparatus according to an embodiment of this application.

## DESCRIPTION OF EMBODIMENTS

The following describes technical terms in embodiments of this application.

1. Phase noise

Phase noise causes random phase offset of a signal in time domain, and the phase offset may also be observed in frequency domain. A signal generated by an oscillator is used as an example. If the signal is not interfered with by phase noise, an entire power of the oscillator is concentrated at a frequency fo, or a reference frequency. However, if the signal is interfered with by phase noise, a part of the power of the oscillator is extended from the reference frequency to an adjacent frequency, resulting in a sideband (sideband). Currently, a transmitted signal is obtained based on frequency multiplication of a low-frequency signal. In this case, a magnitude of phase noise is positively correlated with a value of a frequency multiplication factor. A larger frequency multiplication factor indicates a higher frequency of a signal and larger phase noise. In other words, higher frequency domain of a signal indicates greater phase noise interference to the signal. Therefore, for a high-frequency signal, for example a signal of a frequency band such as 28 gigahertz (GHz), 39 GHz, 60 GHz, or 73 GHz, phase noise compensation needs to be accurately performed, to avoid signal distortion to a greatest extent.

2. Discrete Fourier transform-spread-orthogonal frequency division multiplexing (discrete Fourier transform, DFT)-(spread, s)-(orthogonal frequency division multiplexing, OFDM)

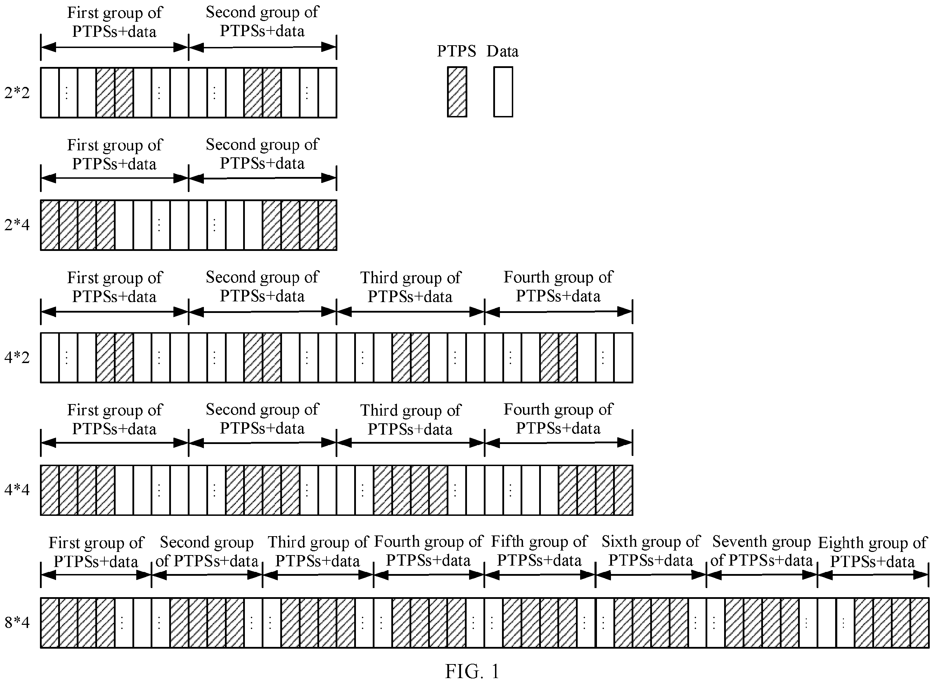

In a DFT-s-OFDM technology, a reference signal, also referred to as a pilot, for example, a phase tracking reference signal (phase tracking reference signal, PTRS), is introduced to implement phase noise compensation based on analysis of phase noise interference to the reference signal, to improve signal demodulation performance in a phase noise condition. Specifically, a transmit end, for example, UE, may insert a reference signal into each group of data signals based on a predefined reference signal density. For example, FIG. 1 is a schematic diagram of a time sequence of signals corresponding to DFT-s-OFDM. As shown in FIG. 1, there may be a plurality of groups of data signals, for example, two groups, four groups, or eight groups. A corresponding quantity of reference signals, for example, two or four reference signals, may be inserted into two ends or a middle part of each group of data. Then, the UE may send the reference signal and the data signal to a receive end, for example, a base station. Correspondingly, the base station may receive the reference signal and the data signal that are interfered with by phase noise, and determine the phase noise of each group of data signals based on the reference signal interfered with by the phase noise, to perform phase noise compensation on each group of data signals interfered with by the phase noise, to eliminate interference caused by the phase noise to the data signal.

3. Reference signal density

In OFDM, an uplink reference signal density and a downlink reference signal density may use a same configuration. The configuration may include a frequency domain density of a reference signal and a time domain density of the reference signal.

In an example, a configuration of the time domain density of the reference signal may be shown in Table 1.

**Table 1**

| Modulation and coding scheme (modulation and coding scheme, MCS) table | Time domain density |
|---|---|
| $I_{MCS}$<ptrs-MCS1 | No reference signal |
| ptrs-MCS1$\leq I_{MCS}$<ptrs-MCS2 | 4 |
| ptrs-MCS2$\leq I_{MCS}$<ptrs-MCS3 | 2 |
| ptrs-MCS3$\leq I_{MCS}$<ptrs-MCS4 | 1 |

$I_{MCS}$ is an MCS of data, and the data is carried in a data signal corresponding to the reference signal. Generally, the MCS may include at least one of the following parameters: a modulation order (modulation order), a target code rate (target code rate), or spectral efficiency (spectral efficiency). An example of a configuration of the MCS may be shown in Table 2.

**Table 2**

| MCS index (MCS index) | Modulation order | Target code rate* 1024 | Frequency efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |

(continued)

| MCS index (MCS index) | Modulation order | Target code rate* 1024 | Frequency efficiency |
|---|---|---|---|
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Predefined | |
| 30 | 4 | Predefined | |
| 31 | 6 | Predefined | |

Modulation orders 2, 4, and 6 indicate QPSK, 16 quadrature amplitude modulation (quadrature amplitude modulation, QAM), and 64QAM respectively. The target code rate is a ratio of original data bits to encoded data bits, and Table 2 shows a value obtained by multiplying the target code rate by 1024. The frequency efficiency may be a product of a modulation order and a target code rate in Table 2, and indicates a quantity of bits that one subcarrier can transmit. Further, $I_{MCS}$ in Table 1 may be an MCS index in Table 2, or may be at least one of a modulation order, a target code rate, and frequency efficiency that are corresponding to an MCS index in Table 2. ptrs-MCS is an MCS threshold, and a modulation order is used as an example. ptrs-MCS1 indicates that the modulation order is 2, ptrs-MCS2 indicates that the modulation order is 4, and ptrs-MCS3 indicates that the modulation order is 6. In other words, if the modulation order is less than 2, there is no reference signal in time domain, and correspondingly, there is no reference signal in frequency domain. If the modulation order is greater than or equal to 2 and the modulation order is less than 4, there is one reference signal in every four time units in time domain. The time unit may be a slot (slot), a symbol (symbol), a mini-slot (mini-slot), a subframe (subframe), a radio frame (radio frame), or the like. This is not specifically limited in this application. If the modulation order is greater than or equal to 4 and the modulation order is less than 6, there is one reference signal in every two time units in time domain, and so on.

In an example, a configuration of the frequency domain density of the reference signal may be shown in Table 3.

**Table 3**

| Scheduled bandwidth | Frequency domain density |
|---|---|
| $N_{RB} < N_{RB0}$ | No reference signal |
| $N_{RB0} \leq N_{RB} < N_{RB1}$ | 2 |
| $N_{RB1} \leq N_{RB}$ | 4 |

The scheduled bandwidth generally is a bandwidth scheduled by using a downlink control information (downlink control information, DCI) message, and the scheduled bandwidth may be indicated by using a quantity ($N_{RB}$) of resource blocks (resource blocks, RBs). $N_{RB0}$ indicates a first threshold of the quantity of resource blocks, $N_{RB1}$ indicates a second threshold of the quantity of resource blocks, and values of $N_{RB0}$ and $N_{RB1}$ may be flexibly configured. This is not limited herein. If the quantity of resource blocks corresponding to the scheduled bandwidth is less than $N_{RB0}$, there is no reference signal in the scheduled bandwidth, and correspondingly, there is no reference signal in time domain. If the quantity of resource blocks corresponding to the scheduled bandwidth is greater than or equal to $N_{RB0}$ and the quantity of resource blocks is less than $N_{RB1}$, there are two reference signals in the scheduled bandwidth. If the quantity of resource blocks corresponding to the scheduled bandwidth is greater than or equal to $N_{RB1}$, there are four reference signals in the scheduled bandwidth.

In DFT-s-OFDM, a density of a reference signal generally depends on a scheduled bandwidth, and therefore only a reference signal density in frequency domain exists, for example, as shown in Table 4.

**Table 4**

| Scheduled bandwidth | Quantity of reference signal blocks | Quantity of reference signals in a reference signal block |
|---|---|---|
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

$N_{RB0}$ indicates a first threshold of a quantity of resource blocks, $N_{RB1}$ indicates a second threshold of the quantity of resource blocks, $N_{RB2}$ indicates a third threshold of the quantity of resource blocks, $N_{RB3}$ indicates a fourth threshold of the quantity of resource blocks, $N_{RB4}$ indicates a fifth threshold of the quantity of resource blocks, and values of $N_{RB0}$ to $N_{RB4}$ may be flexibly configured. This is not limited herein. If a quantity of resource blocks corresponding to the scheduled bandwidth is greater than or equal to $N_{RB0}$ and the quantity of resource blocks is less than $N_{RB1}$, there are two reference signal blocks in the scheduled bandwidth, and each reference signal block has two reference signals. It can be learned that if the quantity of resource blocks corresponding to the scheduled bandwidth is greater than or equal to $N_{RB1}$ and the quantity of resource blocks is less than $N_{RB2}$, there are two reference signal blocks in the scheduled bandwidth, and each reference signal block has four reference signals. If the quantity of resource blocks corresponding to the scheduled bandwidth is greater than or equal to $N_{RB2}$ and the quantity of resource blocks is less than $N_{RB3}$, there are four reference signal blocks in the scheduled bandwidth, and each reference signal block has two reference signals. If the quantity of resource blocks corresponding to the scheduled bandwidth is greater than or equal to $N_{RB3}$ and the quantity of resource blocks is less than $N_{RB4}$, there are four reference signal blocks in the scheduled bandwidth, and each reference signal block has four reference signals. If the quantity of resource blocks corresponding to the scheduled bandwidth is greater than or equal to $N_{RB4}$, there are eight reference signal blocks in the scheduled bandwidth, and each reference signal block has two reference signals.

It should be noted that Table 1 to Table 4 may be scheduled by using signaling, for example, a radio resource control (radio resource control, RRC) message, a DCI message, or a media access control-control element (media access control-control element, MAC-CE) message. This is not specifically limited herein.

4. PAPR

The PAPR is a ratio of a maximum instantaneous power to an average power, and is also referred to as a peak-to-average power ratio.

Specifically, a wireless signal, observed in time domain, is a sine wave with a constantly changing amplitude, and amplitudes of the signal in different periodicities are different. Therefore, average powers and peak powers in the periodicities are also different. In this case, ratios of the peak powers to the average powers in the periodicities are not suitable for measurement of a PAPR. In other words, to measure the PAPR, a long period of time for observation is needed, for example, a plurality of consecutive periodicities. In this period of time, a peak power may be a maximum instantaneous power that occurs at a specific probability, for example, a probability of 0.01%, or a probability of $10^{-4}$. A ratio of the maximum instantaneous power to an average power is the PAPR.

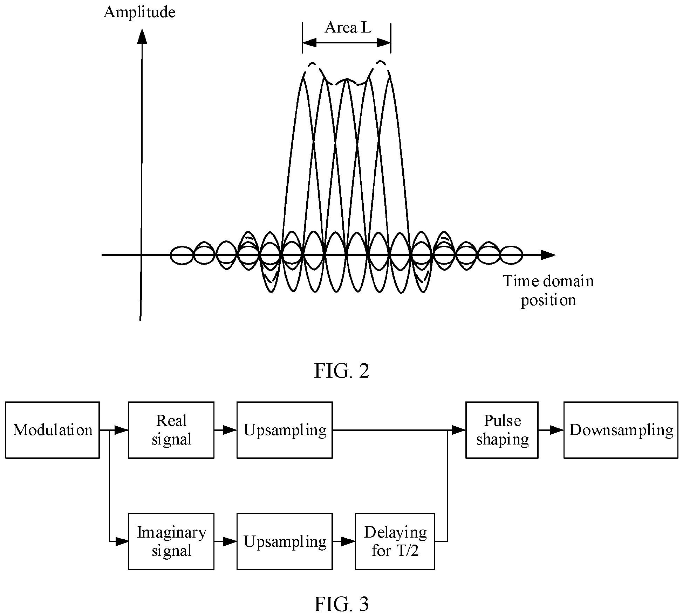

Further, for multi-carrier signals in the foregoing OFDM, a PAPR is usually generated through superposition of the multi-carrier signals. For example, FIG. 2 is a schematic diagram of waveforms of multi-carrier signals. As shown in FIG. 2, in the multi-carrier signals in OFDM, a waveform of a carrier signal may be a sine function, to be specific, a wave peak is located in the middle, and tails form on a left side and a right side of the wave peak. In this case, wave peaks of a plurality of consecutive carrier signals may be superposed to form a peak area, for example, an area L. In this case, a maximum instantaneous power generated in the peak area is usually large, causing a large PAPR of a system.

It may be understood that, in wireless communication, if a signal needs to be sent to a remote place, a power amplifier is needed for power amplification of the signal. However, limited by technologies and costs, the power amplifier can perform linear amplification on the signal only in a specific power interval. If the power interval is exceeded, signal distortion is caused, and consequently, a receive end cannot correctly parse the signal. On this basis, if a PAPR of the signal is excessively large, an amplification multiple of the signal in the power interval is reduced, and consequently, a coverage area of the signal is reduced. Therefore, to meet a signal coverage requirement, the PAPR of the signal needs to be reduced as much as possible.

5. Offset quadrature amplitude modulation (offset quadrature amplitude modulation, OQAM)

A path loss (also referred to as a path loss) exists in a wireless transmission process of a signal, and a path loss of a high-frequency signal is particularly severe. To improve receiving quality of a high-frequency signal, increasing a sending power of the high-frequency signal is a main solution for resisting a path loss. Therefore, an OQAM technology may be used to modulate the high-frequency signal, to obtain a low PAPR, and improve the sending power of the high-frequency signal.

Specifically, single-carrier offset quadrature amplitude modulation (single-carrier offset quadrature amplitude modulation, SC-OQAM) is used as an example (for understanding of multi-carrier, reference may be made to the example, and details are not described again). There are usually two manners to implement the SC-OQAM. One is time domain implementation, and the other is frequency domain implementation, which are separately described below.

Time domain implementation

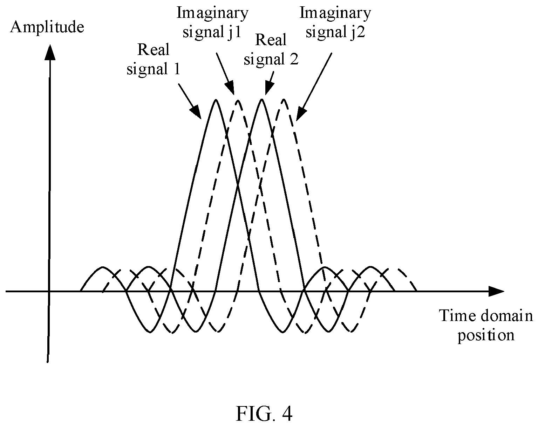

UE is used as an example. FIG. 3 is a schematic flowchart of time domain implementation. As shown in FIG. 3, first, the UE may modulate a time-domain signal based on a parameter corresponding to an MCS of data, such as an encoded character string 01, to include the data in the time-domain signal. Then, the UE may modulate the time-domain signal into a discrete time-domain signal, for example, a discrete real signal and a discrete imaginary signal. Next, the UE may perform upsampling or interpolation processing on the discrete real signal and the discrete imaginary signal, to obtain a more consecutive signal in time domain, for example, an upsampled real signal and an upsampled imaginary signal. Next, the UE may delay one of the signals for T/2, for example, delay the upsampled imaginary signal for T/2, to obtain a real signal and an imaginary signal that have a partial orthogonal relationship, or a real-imaginary separated quadrature amplitude modulation (quadrature amplitude modulation, QAM) signal. A time domain position at which the real signal (a wave peak of the real signal) is located may be referred to as a real signal position, and a time domain position at which the imaginary signal (a wave peak of the imaginary signal) is located may be referred to as an imaginary signal position. For example, FIG. 4 is a schematic diagram of a waveform with a partial orthogonal relationship. As shown in FIG. 4, a time domain interval between a real signal 1 (shown by a solid line) and an imaginary signal j 1 (shown by a dashed line) is T/2, and a time domain interval between a real signal 2 (shown by a solid line) and an imaginary signal j2 (shown by a dashed line) is T/2. It can be learned that the real signal 1 has a non-orthogonal relationship with a next signal, for example, the imaginary signal j 1, but the real signal 1 has an orthogonal relationship with a second subsequent signal, for example, the real signal 2. Similarly, the imaginary signal j 1 has a non-orthogonal relationship with a next signal, for example, the real signal 2, but the imaginary signal j 1 has an orthogonal relationship with a second subsequent signal, for example, the imaginary signal j2. In other words, the partial orthogonal relationship means that a signal has a non-orthogonal relationship with a next signal of the signal, and has an orthogonal relationship with a second subsequent signal of the signal. An advantage is as follows: A wave peak of a real signal is superposed on a non-wave peak part of an imaginary signal, to avoid a case in which the wave peak of the real signal and a wave peak of the imaginary signal are superposed in a complex signal. This can effectively reduce a PAPR of the signal. Then, the UE may perform pulse shaping or perform, by using a filter, filtering on the real-imaginary separated QAM signal, to further reduce the PAPR of the signal, to obtain a shaped real signal and a shaped imaginary signal. Finally, the UE may perform downsampling or decimation processing on the shaped real signal and the shaped imaginary signal, to obtain a downsampled real signal and a downsampled imaginary signal, and a radio frequency antenna sends the downsampled real signal and the downsampled imaginary signal, so that a receive end, for example, a base station, receives the downsampled real signal and the downsampled imaginary signal. The base station may demodulate the downsampled real signal and the downsampled imaginary signal based on the parameter corresponding to the MCS of the data, to obtain the data.

Frequency domain implementation

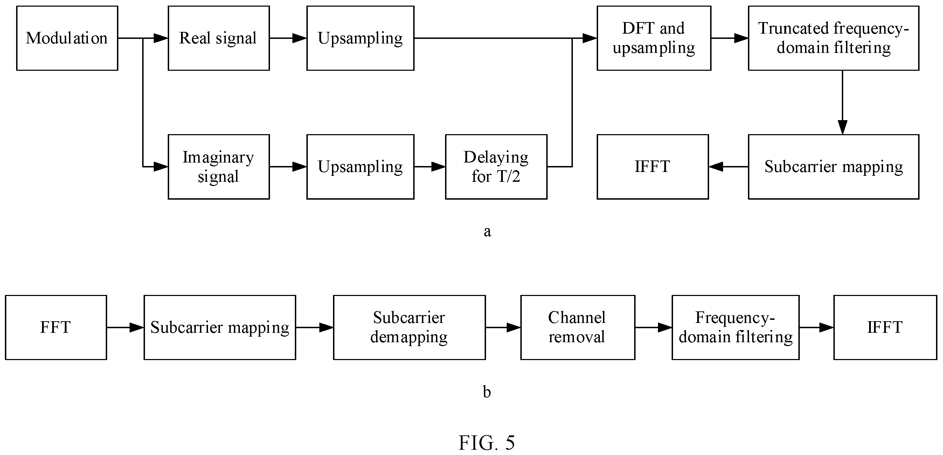

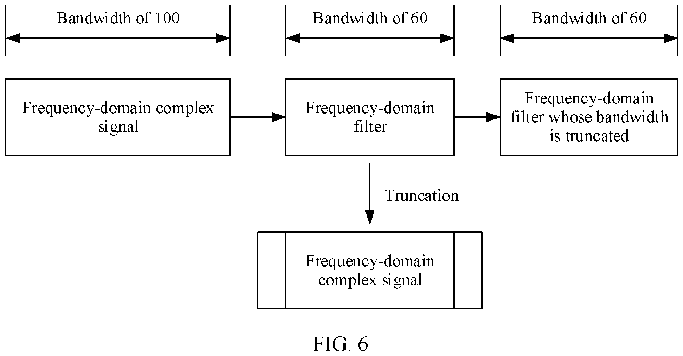

The UE is still used as an example. FIG. 5 is a schematic flowchart of frequency domain implementation. As shown in a in FIG. 5, first, the UE may perform modulation based on a parameter corresponding to an MCS of data, to obtain a time-domain QAM signal, for example, [X1+jY1, X2+jY2, X3+jY3, ...], and then perform real-imaginary separation on the QAM signal to obtain a real signal, for example, [X1, X2, X3, ...], and an imaginary signal, for example, [jY1, jY2, jY3, ...]. Next, the UE performs upsampling and/or delaying for T/2 on the imaginary signal and the real signal, to obtain an upsampled and/or T/2-delayed real signal, for example, [X1, 0, X2, 0, X3, 0, ...], and an upsampled and/or T/2-delayed imaginary signal, for example, [0, jY1, 0, jY2, 0, jY3, ...], and combines the two signals to obtain a time-domain OQAM signal (denoted as an OQAM signal 1), for example, [X1, jY1, X2, jY2, X3, jY3, ...]. A length of the OQAM signal is twice a length of the original QAM signal. Certainly, the OQAM signal 1 may alternatively be implemented in another manner. This is not specifically limited in this application. The UE performs DFT on the OQAM signal 1 based on a length that is twice the length of the original OAM signal, to obtain a frequency-domain complex signal, and performs truncated frequency-domain filtering on the frequency-domain complex signal, to filter out corresponding redundant data in the frequency-domain complex signal, to obtain a frequency-domain complex signal whose bandwidth is truncated. For example, FIG. 6 is a schematic diagram of signals in truncated frequency-domain filtering. As shown in FIG. 6, a bandwidth of a frequency-domain complex signal is 100, that is, a length of 100 frequency-domain resource blocks, and a bandwidth of a frequency-domain filter is 60, that is, a length of 60 frequency-domain resource blocks. In this case, the truncated frequency-domain filtering is performed on the frequency-domain complex signal by using the frequency-domain filter, so that a bandwidth of 40 of the frequency-domain complex signal can be truncated, that is, 40 redundant signals in the frequency-domain complex signal are filtered out, to obtain a frequency-domain complex signal whose bandwidth is 60. Finally, the UE may sequentially perform subcarrier mapping (subcarrier mapping) and inverse fast Fourier transform (inverse fast Fourier transform, IFFT) on the frequency-domain complex signal whose bandwidth is truncated, to obtain a time-domain signal, for example, an OFDM signal, and the time-domain signal is sent by a radio frequency antenna. Correspondingly, as shown in b in FIG. 5, a receive end, for example, a base station, may receive the time-domain signal, and perform fast Fourier transform (fast Fourier transform, FFT) and subcarrier demapping on the time-domain signal, to obtain a frequency-domain complex signal. The base station may perform channel removal, frequency-domain filtering, and IFFT on the frequency-domain complex signal, to obtain a time-domain OQAM signal (denoted as an OQAM signal 2). The base station may demodulate the OQAM signal 2 based on the parameter corresponding to the MCS of the data, to obtain the data carried in the OQAM signal 2. The channel removal means removing a channel identifier from the frequency-domain complex signal. It should be noted that a signal obtained by the base station through the IFFT is a non-orthogonal time-domain signal, for example, the OQAM signal 2, and interference exists between time-domain signals. In other words, each time-domain signal includes two parts of signals. One part of the signals is a signal of the time-domain signal itself, or is referred to as a non-interference signal, and the other part of the signals is an interference signal generated by another time-domain signal for the time-domain signal. For example, the OQAM signal 1 is [X1, jY1, X2, jY2, X3, jY3, ...], and the OQAM signal 2 is [X1+jISI1, jY1+ISI12, X2+jISI3, jY2+ISI14, X3+jISI5, jY3+ISI6, ...]. For example, a time-domain signal in the OQAM signal 2 is X1+jISI1, X1 is a non-interference signal of the time-domain signal, and jISI1 is an interference signal of the time-domain signal, that is, imaginary interference exists at a real position. For example, a time-domain signal in the OQAM signal 2 is jY1+ISI12, jY1 is a non-interference signal of the time-domain signal, and ISI2 is an interference signal of the time-domain signal, that is, real interference exists at an imaginary position.

6. Phase noise compensation in OQAM

Similar to the foregoing phase noise compensation principle of DFT-s-OFDM, a reference signal, for example, a PTRS, may also be introduced into an OQAM technology, to analyze phase noise interference to the reference signal, and implement phase noise compensation in OQAM. The reference signal may include a signal (denoted as a compensation signal) used for phase noise compensation and a redundant signal. Specifically, if a magnitude of an interference signal in an OQAM signal is a fixed value (or a value agreed in a protocol), the OQAM signal may be considered as a compensation signal. If the OQAM signal is used to generate an interference signal of a fixed magnitude for a compensation signal, the OQAM signal may be considered as a redundant signal. However, if a magnitude of an interference signal in the OQAM signal is random, for example, determined based on carried data, the OQAM signal may be considered as a data signal.

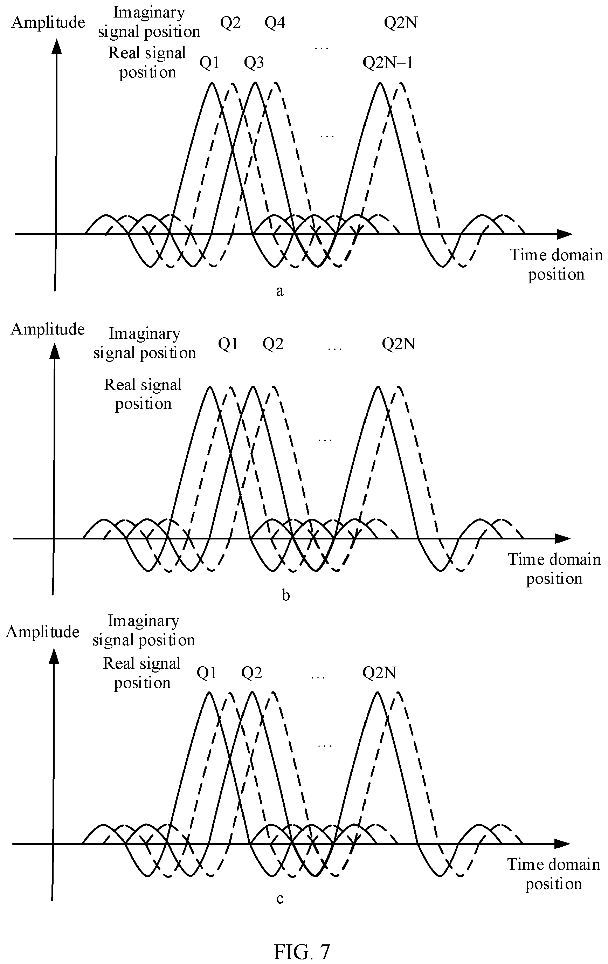

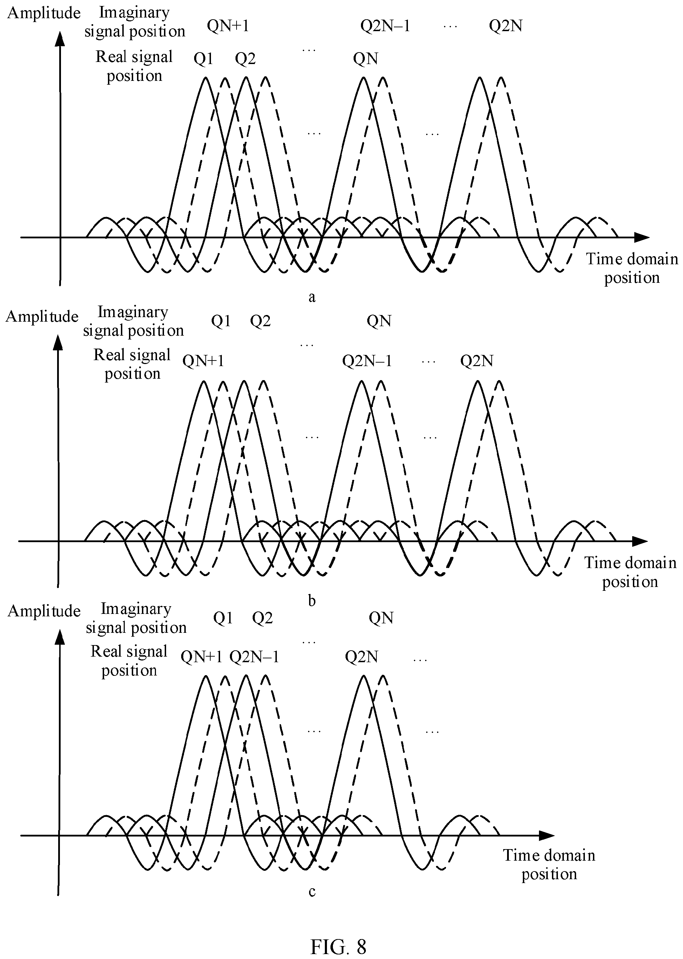

The SC-OQAM is still used as an example (for understanding of multi-carrier, reference may be made to the example, and details are not described again). If there are 2N reference signals, where N is a positive integer, the 2N reference signals (Q1 to Q2N) may be placed consecutively. "Placed consecutively" may mean being consecutive in time domain positions (as shown in a in FIG. 7), or consecutive in imaginary signal positions (as shown in b in FIG. 7), or consecutive in real signal positions (as shown in c in FIG. 7). Alternatively, in some other placement manners, N reference signals are placed at consecutive real signal positions, and the other N reference signals are placed at inconsecutive imaginary signal positions (as shown in a in FIG. 8). Alternatively, N reference signals may be placed at consecutive imaginary signal positions, and the other N reference signals are placed at inconsecutive real signal positions (as shown in b in FIG. 8). Alternatively, N reference signals may be placed at consecutive real signal positions, and the other N reference signals are placed at consecutive imaginary signal positions (as shown in c in FIG. 8).

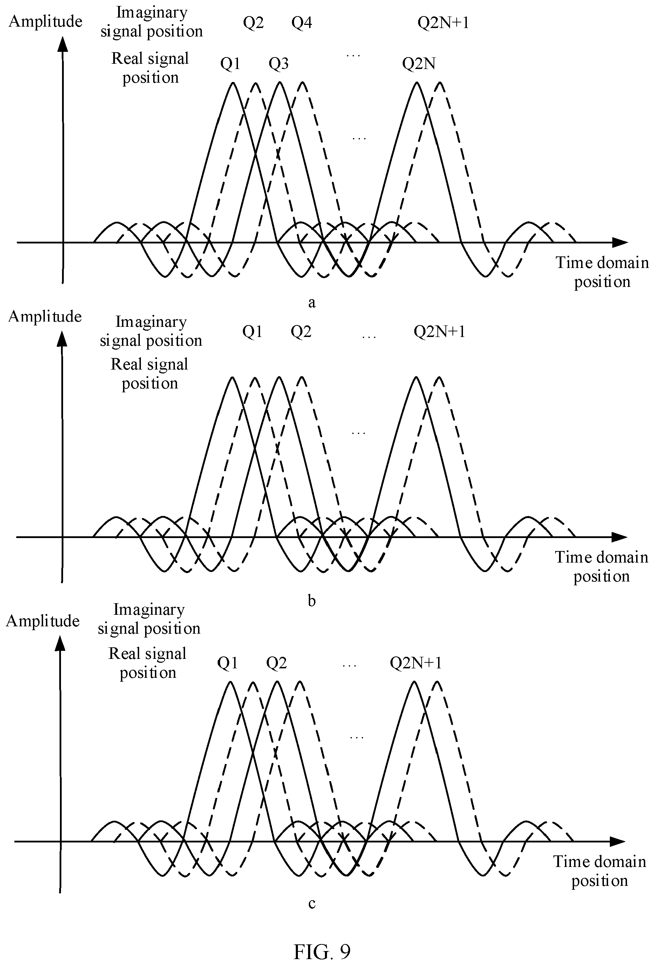

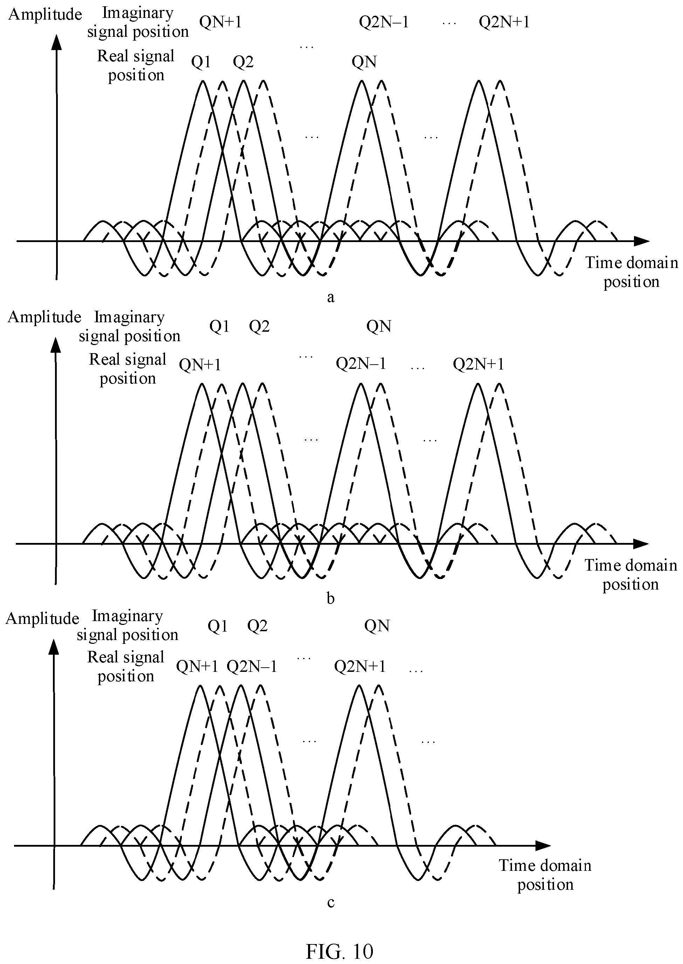

If there are 2N+1 reference signals, the 2N+1 reference signals may be placed consecutively. "Placed consecutively" may mean being consecutive in time domain positions (as shown in a in FIG. 9), or consecutive in imaginary signal positions (as shown in b in FIG. 9), or consecutive in real signal positions (as shown in c in FIG. 9). Alternatively, in some other placement manners, N or N+1 reference signals are placed at consecutive real signal positions, and the other N+1 or N reference signals are placed at inconsecutive imaginary signal positions (as shown in a in FIG. 10). Alternatively, N or N+1 reference signals may be placed at consecutive imaginary signal positions, and the other N+1 or N reference signals are placed at inconsecutive real signal positions (as shown in b in FIG. 10). Alternatively, N or N+1 reference signals may be placed at consecutive real signal positions, and the other N+1 or N reference signals are placed at consecutive imaginary signal positions (as shown in c in FIG. 10).

It should be noted that a reference signal placed at a real signal position may be a real signal, or may be an imaginary signal. Similarly, a reference signal placed at an imaginary signal position may be a real signal, or may be an imaginary signal. This is not limited herein.

Further, if there are 2N reference signals, N reference signals are redundant signals, and the other N reference signals are compensation signals. For example, if there are 2N+1 reference signals, N or N+1 reference signals may be redundant signals, and the other N+1 or N reference signals may be compensation signals. In this case, UE may modulate amplitudes of the N or N+1 redundant signals, so that a magnitude of interference to the N+1 or N compensation signals, that is, a magnitude of an interference signal, is a fixed value. In this way, a base station may determine corresponding phase noise based on the fixed value, to implement phase noise compensation. For ease of understanding, four reference signals are used as an example below for description.

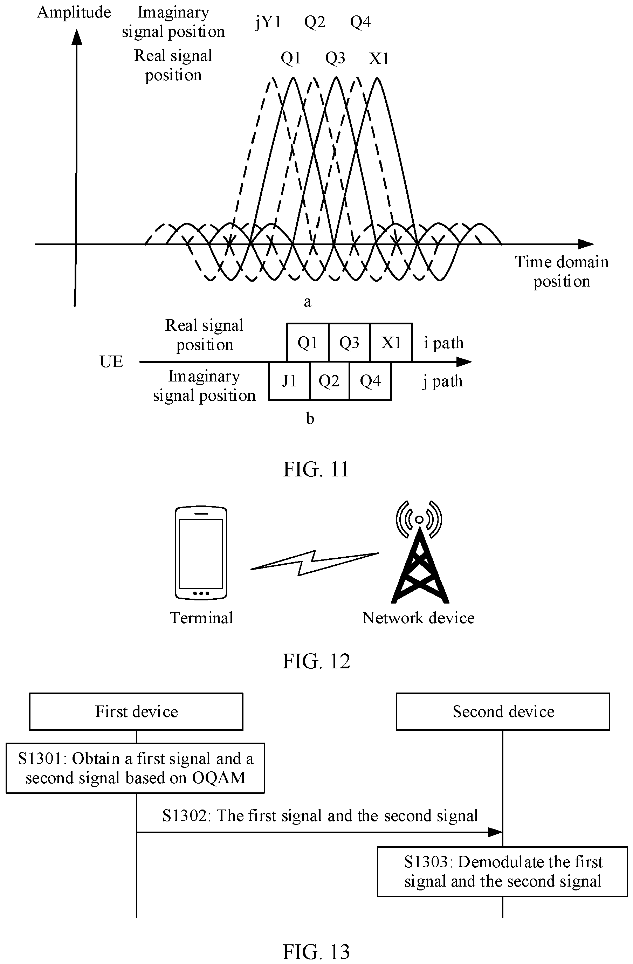

a in FIG. 11 is a schematic diagram of waveforms of four reference signals of UE, and b in FIG. 11 is a schematic diagram of time domain positions of the four reference signals of the UE. As shown in FIG. 11, the four reference signals include Q1 (a compensation signal), Q3 (a compensation signal), Q2 (a redundant signal), and Q4 (a redundant signal). Q1 to Q4 are placed at consecutive time domain positions, Q1 and Q3 are placed at consecutive real signal positions, and Q2 and Q4 are placed at consecutive imaginary signal positions. In addition, a data signal jY1 of the UE is placed at an imaginary signal position, and a data signal X1 of the UE is placed at a real signal position. If the UE sends the signal shown in FIG. 11 to a base station, a signal received by the base station may be shown in Formula 1 and Formula 2:

$$Z1=(Q1+a1*jQ2+a2*jQ4+a3*jY1+a4*X1)*exp(1i*\Theta1) \qquad (1)$$

$$Z3=(Q3+b1*jQ2+b2*jQ4+b3*jY1+b4*X1)*exp(1i*\Theta1) \qquad (2)$$

Z1 is a signal received by the base station at a placement position of Q1, Q1 is a non-interference signal in Z1, a1*jQ2 is an interference signal generated by Q2 for Q1, a2*jQ4 is an interference signal generated by Q4 for Q1, a3*jY1 is an interference signal generated by the data signal jY1 for Q1, a4*X1 is an interference signal generated by the data signal X1 for Q1, and exp(1i*Θ1) is UE phase noise. Z3 is a signal received by the base station at a placement position of Q3, Q3 is a non-interference signal in Z3, b1*jQ2 is an interference signal generated by Q2 for Q3, b2*jQ4 is an interference signal generated by Q4 for Q3, b3*jY1 is an interference signal generated by the data signal jY1 for Q3, and b4*X1 is an interference signal generated by the data signal X1 for Q3. a1*jQ2+a2*jQ4+a3*jY1+a4*X1 is set to be equal to INT1, indicating that an interference signal of Z1 is INT1. b1*jQ2+b2*jQ4+b3*jY1+b4*X1 is set to be equal to INT3, indicating that an interference signal of Z3 is INT2.

It may be understood that, because data carried in the data signal is determined, a3*jY1 and a4*X1, and b3*jY1 and b4*X1 are determined. On this basis, if the UE modulates Q1 to Q4 to satisfy INT1=INT3=A1, where A1 is a fixed value agreed by the base station and the UE in advance, that is, amplitudes of INT1 and INT3 are the same, the base station may determine a value of the phase noise exp(1i*Θ1), to implement phase noise compensation. However, a problem is as follows: Q1 and Q3 can be used only for phase noise compensation, and cannot be used for data transmission, and Q2 and Q4 can be used only for generating interference of a fixed magnitude, and cannot be used for data transmission. Consequently, overall data transmission efficiency and spectral efficiency cannot be improved.

In view of the foregoing technical problem, embodiments of this application provide the following technical solutions, to improve data transmission efficiency and spectral efficiency.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future communication system, for example, 6th generation (6th generation, 6G). Certainly, the future communication system may alternatively be named in another manner, which falls within the scope of this application. This is not limited in this application.

Various aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to accompanying drawings. In addition, a combination of these solutions may be used.

In addition, in embodiments of this application, expressions such as "example" and "for example" are used to represent giving an example, an illustration, or a description. Any embodiment or design solution described as an "example" in this application shall not be explained as being more preferred or having more advantages than another embodiment or design solution. Specifically, the word "example" is used to present a concept in a specific manner.

In embodiments of this application, "information (information)", "signal (signal)", "message (message)", "channel (channel)", and "signaling (signaling)" may be interchangeably used sometimes. It should be noted that expressed meanings are consistent when differences are not emphasized. The terms "of (of)", "corresponding (corresponding, relevant)", and "corresponding (corresponding)" may be interchangeably used sometimes. It should be noted that meanings expressed by the terms are consistent when differences of the terms are not emphasized. In addition, "/" mentioned in this application may indicate an "or" relationship.

A network architecture and a service scenario described in embodiments of this application are intended to describe the technical solutions in embodiments of this application more clearly, and do not constitute a limitation on the technical solutions in embodiments of this application. A person of ordinary skill in the art may know that: With the evolution of the network architecture and the emergence of new service scenarios, the technical solutions in embodiments of this application are also applicable to similar technical problems.

For ease of understanding embodiments of this application, a communication system shown in FIG. 12 is first used as an example to describe in detail a communication system applicable to embodiments of this application. For example, FIG. 12 is a schematic diagram of an architecture of a communication system to which a communication method according to embodiments of this application is applicable.

As shown in FIG. 12, the communication system includes a terminal and a network device.

The terminal is a terminal that accesses a network and has a wireless sending and receiving function, or a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handset (handset), a laptop computer (laptop computer), a machine type communication (machine type communication, MTC) terminal, a computer having a wireless sending and receiving function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) that has a terminal function, or the like. Alternatively, the terminal in this application may be an in-vehicle module, an in-vehicle subassembly, an in-vehicle component, an in-vehicle chip, or an in-vehicle unit that is built in a vehicle as one or more components or units.

The network device, for example, an access network device, is a device that is located on a network side of the communication system and has a wireless sending and receiving function, or a chip or a chip system that may be disposed in the device. The network device may be a next-generation mobile communication system, for example, a 6G access network device, for example, a 6G base station or a 6G core network element. Alternatively, in the next-generation mobile communication system, the network device may be named in another manner, which falls within the protection scope of embodiments of this application. This is not limited in this application. In addition, the network device may alternatively be a gNB in a 5G system, for example, an NR system, or one or a group of (including a plurality of antenna panels) antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), or may be a central unit (central unit, CU) or a distributed unit (distributed unit, DU), an RSU having a base station function, a wired access gateway, or a 5G core network element. In addition, the network device may alternatively be an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

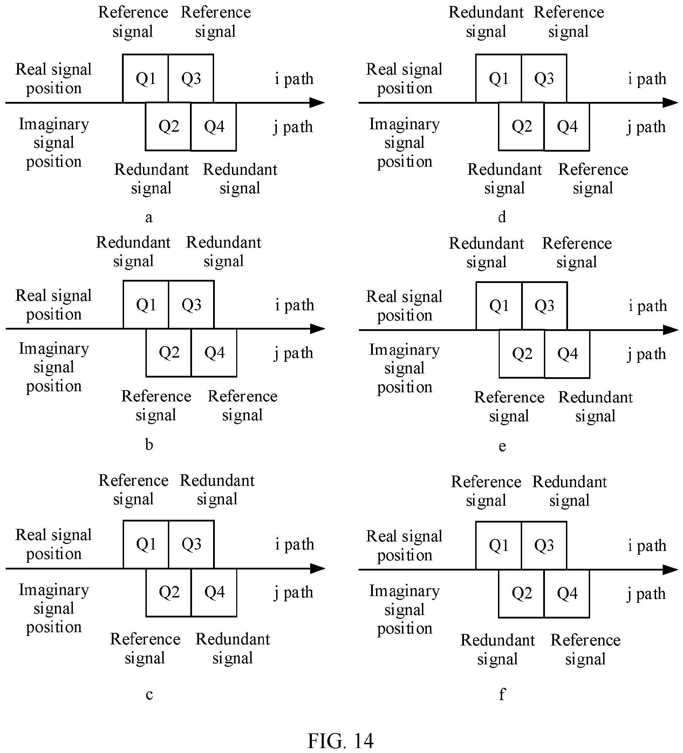

The communication system to which the communication method according to embodiments of this application is applicable is described above. The communication method according to embodiments of this application is described specifically below with reference to FIG. 13 and FIG. 14.

For example, FIG. 13 is a schematic flowchart 1 of a communication method according to an embodiment of this application. The communication method is applicable to communication between a first device and a second device. The first device and the second device may be the terminal or the network device in the communication system shown in FIG. 12. For example, the first device is the terminal, and the second device is the network device. For another example, the first device is the network device, and the second device is the terminal. As shown in FIG. 13, the communication method includes S1301, S1302, and S1303.

S1301: The first device obtains a first signal and a second signal based on OQAM.

The first signal and the second signal may be signals in one bandwidth, for example, signals in one bandwidth scheduled by using DCI. For example, the first signal is a reference signal, and the second signal is a data signal, or the first signal is a data signal, and the second signal is a reference signal. For ease of understanding, an example in which the first signal is a reference signal and the second signal is a data signal is used below for description.

For the first signal, first data is carried in the first signal. For example, the first data may be carried in the first signal based on a time domain position of the first signal. Optionally, the first data may alternatively be carried in the first signal based on at least one of the following: an amplitude or a polarity of the first signal. In other words, the first data may be carried in the first signal based on a characteristic of the first signal, for example, the polarity or the amplitude, or may be carried in the first signal based on the time domain position of the first signal, to further improve data transmission efficiency and spectral efficiency. The following provides detailed descriptions.

Manner 11: The first data is carried in the first signal based on the time domain position of the first signal.

It can be learned from related descriptions in "5. OQAM" and "6. Phase noise compensation in OQAM" that the first signal includes a non-interference signal and an interference signal, and the non-interference signal and the interference signal are located at a same time domain position. The time domain position of the first signal may be understood as a time domain position of the interference signal of the first signal or a time domain position of the non-interference signal of the first signal. This is not specifically limited in this application. As a reference signal, the first signal may be a compensation signal or a redundant signal. The time domain position of the first signal may be a relative time domain position of the compensation signal or the redundant signal. For example, the first signal is the compensation signal in the reference signal, and the time domain position of the first signal may be a time domain position of the compensation signal relative to the redundant signal in the reference signal. For another example, the first signal is the redundant signal in the reference signal, and the time domain position of the first signal may be a time domain position of the redundant signal relative to the compensation signal in the reference signal. Alternatively, the time domain position of the first signal may be an absolute time domain position. This is not specifically limited in this application. For ease of understanding, a relative time domain position is used as an example below for description. For understanding of an absolute time domain position, refer to the example. Details are not described again.

Specifically, the first signal may be placed at different time domain positions, for example, a real signal position or an imaginary signal position. In this case, the first signal may carry corresponding data, that is, the first data, based on a difference between relative time domain positions of the first signal and another signal (a compensation signal or a redundant signal). For example, FIG. 14 shows four consecutive reference signals in time domain, including Q1 to Q4. Different signals in the four reference signals are used as compensation signals and redundant signals. The compensation signal and the redundant signal have different relative time domain positions, which are used to carry corresponding data. For example, as shown in a in FIG. 14, a first time domain position is as follows: Q 1 and Q3 are compensation signals, and Q2 and Q4 are redundant signals. For example, as shown in b in FIG. 14, a second time domain position is as follows: Q1 and Q3 are redundant signals, and Q2 and Q4 are compensation signals. For example, as shown in c in FIG. 14, a third time domain position is as follows: Q1 and Q2 are compensation signals, and Q3 and Q4 are redundant signals. For example, as shown in d in FIG. 14, a fourth time domain position is as follows: Q1 and Q2 are redundant signals, and Q3 and Q4 are compensation signals. For example, as shown in e in FIG. 14, a fifth time domain position is as follows: Q1 and Q4 are redundant signals, and Q2 and Q3 are compensation signals. For example, as shown in f in FIG. 14, a sixth time domain position is as follows: Q1 and Q4 are compensation signals, and Q2 and Q3 are redundant signals. Four of the six time domain positions may be used to carry data of two bits. In an example, the first time domain position indicates that a value of the two bits is 00, the second time domain position indicates that a value of the two bits is 01, the third time domain position indicates that a value of the two bits is 10, or the fourth time domain position indicates that a value of the two bits is 11. It may be understood that an example of using four signals as compensation signals and redundant signals is used above, which constitutes no limitation. If there are more compensation signals and redundant signals, data of more bits may be carried. On the contrary, if there are fewer compensation signals and redundant signals, data of fewer bits may be carried. For specific implementation, refer to the example. Details are not described again.

Manner 12: The first data is carried in the first signal based on at least one of the following: the amplitude or the polarity of the first signal.

The first signal includes a non-interference signal and an interference signal. The first data may be carried in the interference signal of the first signal (briefly referred to as an interference signal below) based on at least one of the following: an amplitude or a polarity of the interference signal. Additionally/Alternatively, the first data is carried in the non-interference signal of the first signal (briefly referred to as a non-interference signal below) based on at least one of the following: an amplitude or a polarity of the non-interference signal.

In a possible manner, the first data is carried in the interference signal based on at least one of the following: the amplitude or the polarity of the interference signal.

It can be learned from related descriptions in "5. OQAM" that, on the basis that the first signal is a real-imaginary separated signal, the interference signal is also a real-imaginary separated signal. The interference signal may be an imaginary signal, which is a signal generated through interference by an imaginary part of another signal (for example, a data signal and a redundant signal), and is denoted as jINT. Alternatively, the interference signal may be a real signal, which is a signal generated through interference by a real part of another signal, and is denoted as INT. To implement phase noise compensation, the first device may modulate a redundant signal, so that the amplitude and the polarity (positive or negative) of the interference signal, that is, jINT or INT, are one or more agreed fixed values. On this basis, one or more fixed values of the amplitude of the interference signal may be used to carry data of one or more bits. Assumption 1: A real signal is used as an example (for understanding of an imaginary signal, refer to the example). An amplitude of the real signal has two fixed values, including 0.5 and 1, which may be used to carry data of one bit (bit). The fixed value 0.5 indicates that a value of the bit is 0, and the fixed value 1 indicates that a value of the bit is 1. Alternatively, the fixed value 0.5 indicates that a value of the bit is 1, and the fixed value 1 indicates that a value of the bit is 0. Assumption 2: A real signal is used as an example (for understanding of an imaginary signal, refer to the example). An amplitude of the real signal has four fixed values, including 0.25, 0.5, 0.75, and 1, which may be used to carry data of two bits. The fixed value 0.25 indicates that a value of the two bits is 00, the fixed value 0.5 indicates that a value of the two bits is 01, the fixed value 0.75 indicates that a value of the two bits is 10, or the fixed value 1 indicates that a value of the two bits is 11. Two polarities of the interference signal may be used to carry data of one bit. Assumption 3: A real signal is used as an example (for understanding of an imaginary signal, refer to the example). A polarity of the real signal includes +INT or -INT. [+INT] indicates that a value of the bit is 1, and [-INT] indicates that a value of the bit is 0. Alternatively, [+INT] indicates that a value of the bit is 0, and [-INT] indicates that a value of the bit is 1. One or more fixed values of a combination of the amplitude and the polarity of the interference signal may be used to carry data of one or more bits. Assumption 4: A real signal is used as an example (for understanding of an imaginary signal, refer to the example). A combination of an amplitude and a polarity of the real signal has four fixed values, including -1, -0.5, 0.5, and 1, which may be used to carry data of two bits. The fixed value -1 indicates that a value of the two bits is 00, the fixed value -0.5 indicates that a value of the two bits is 01, the fixed value 0.5 indicates that a value of the two bits is 10, or the fixed value 1 indicates that a value of the two bits is 11.

It may be understood that an example in which the amplitude of the interference signal has two fixed values or four fixed values is used above, which constitutes no limitation. The amplitude of the interference signal may have more fixed values, for example, eight fixed values or 16 fixed values, to carry data of more bits. For specific implementation, refer to the example. Details are not described again.

In another possible manner, the first data is carried in the first signal based on at least one of the following: the amplitude or the polarity of the non-interference signal.

It can be learned from related descriptions in "5. OQAM" that, on the basis that the first signal is a real-imaginary separated signal, the non-interference signal is also a real-imaginary separated signal. The non-interference signal may be a real signal, denoted as $Q_i$, or the non-interference signal may be an imaginary signal, denoted as $jQ_l$. In this way, a polarity (whether the real signal is a positive signal or a negative signal) of the real signal is indicated by using $\pm Q_i$, or a polarity (whether the imaginary signal is a positive signal or a negative signal) of the imaginary signal is indicated by using $\pm jQ_l$. There are two signal types in total, which may be used to carry data of one bit. Assumption A: A real signal is used as an example (for understanding of an imaginary signal, refer to the example). [+$Q_i$] indicates that a value of the bit is 1, and [-$Q_i$] indicates that a value of the bit is 0. Alternatively, [+$Q_i$] indicates that a value of the bit is 0, and [-$Q_i$] indicates that a value of the bit is 1. A plurality of values of an amplitude of the real signal or a plurality of values of an amplitude of the imaginary signal may be used to carry data of one or more bits. Assumption B: A real signal is used as an example (for understanding of an imaginary signal, refer to the example). An amplitude of the real signal has two values, including 0.5 and 1, which may be used to carry data of one bit. The value 0.5 indicates that a value of the bit is 0, and the value 1 indicates that a value of the bit is 1. Alternatively, the value 0.5 indicates that a value of the bit is 1, and the value 1 indicates that a value of the bit is 0. Assumption C: A real signal is used as an example (for understanding of an imaginary signal, refer to the example). An amplitude of the real signal has four values, including 0.25, 0.5, 0.75, and 1, which may be used to carry data of two bits. The value 0.25 indicates that a value of the two bits is 00, the value 0.5 indicates that a value of the two bits is 01, the value 0.75 indicates that a value of the two bits is 10, or the value 1 indicates that a value of the two bits is 11. A plurality of values of a combination of an amplitude and a polarity of the real signal, or a plurality of values of a combination of an amplitude and a polarity of the imaginary signal may carry data of one or more bits. Assumption D: A real signal is used as an example (for understanding of an imaginary signal, refer to the example). A combination of an amplitude and a polarity of the real signal has four values, including -1, -0.5, 0.5, and 1, which may be used to carry data of two bits. The value -1 indicates that a value of the two bits is 00, the value -0.5 indicates that a value of the two bits is 01, the value 0.5 indicates that a value of the two bits is 10, or the value 1 indicates that a value of the two bits is 11.

It may be understood that the non-interference signal and the interference signal may be combined, and Manner 11 and Manner 12 may also be combined, to jointly carry data of more bits, for example, jointly carry data corresponding to one or more of the following modulation orders: binary phase shift keying (binary phase shift keying, BPSK), pi/2-BPSK, quadrature phase shift keying (quadrature phase shift keying, QPSK), pi/4-QPSK, 8 phase shift keying (phase shift keying, PSK), 16PSK, 16 quadrature amplitude modulation (quadrature amplitude modulation, QAM), or 64QAM.

For the second signal, second data is carried in the second signal. For example, the second signal is a data signal, and an interference signal of the second signal is random in magnitude, and therefore cannot be used to carry the second data. In this case, the second data may be carried in the second signal based on at least one of the following: an amplitude or a polarity of a non-interference signal of the second signal, that is, a signal of the second signal itself. Because the interference signal of the second signal cannot be used to carry data, the second signal mentioned below is the non-interference signal of the second signal, that is, the signal of the second signal itself.

Manner 21: The second data is carried in the second signal based on a polarity of the second signal.

It can be learned from related descriptions in "5. OQAM" that, on the basis that the second signal is a real-imaginary separated signal, that is, a real signal or an imaginary signal, the polarity of the second signal may be a polarity (whether the real signal is a positive signal or a negative signal) of the real signal, or a polarity (whether the imaginary signal is a positive signal or a negative signal) of the imaginary signal. There are two signal types in total, which may be used to carry data of one bit.

Manner 22: The second data is carried in the second signal based on an amplitude of the second signal.

Similarly, it can be learned from related descriptions in "5. OQAM" that the second signal is a real signal or an imaginary signal. An amplitude of the real signal or an amplitude of the imaginary signal may have a plurality of values, which are used to carry data of one or more bits. The real signal is used as an example. The amplitude of the real signal has four values, which are used to carry data of two bits; the amplitude of the real signal has eight values, which are used to carry data of three bits; the amplitude of the real signal has 16 values, which are used to carry data of four bits; or the amplitude of the real signal has 64 values, which are used to carry data of five bits; and so on. Details are not described again.

It may be understood that Manner 21 and Manner 22 may be combined, to carry data of more bits.

Further, the first device may modulate a time-domain signal based on a parameter (denoted as a first MCS parameter) corresponding to an MCS of the first data, to include the first data in the time-domain signal and obtain a first time-domain signal. The first device performs OQAM on the first time-domain signal to obtain the first signal. Similarly, the first device may further modulate a time-domain signal based on a parameter (denoted as a second MCS parameter) corresponding to an MCS of the second data, to include the second data in the time-domain signal and obtain a second time-domain signal. The first device performs OQAM on the second time-domain signal to obtain the second signal. For specific implementation of OQAM, refer to related descriptions in "5. OQAM". Details are not described again. In addition, for specific implementation of the first MCS parameter and the second MCS parameter, refer to related descriptions in "S1303". Details are not described again.

S1302: The first device sends the first signal and the second signal. Correspondingly, the second device receives the first signal and the second signal.

The first device may send the first signal and the second signal based on a radio frequency. The second device may receive the first signal and the second signal based on a radio frequency.

S1303: The second device demodulates the first signal and the second signal.

The second device may demodulate the first signal based on the first MCS parameter, to obtain the first data. In addition, the second device may demodulate the second signal based on the second MCS parameter, to obtain the second data. It should be noted that different signals in one scheduled bandwidth, for example, the first signal and the second signal, are corresponding to different MCS parameters. For example, the first MCS parameter is different from the second MCS parameter. The following provides detailed descriptions.

The first MCS parameter may include at least one of the following: a modulation order, a code rate, or spectral efficiency. Optionally, the modulation order of the first data may include one or more of the following: BPSK, pi/2-BPSK, QPSK, pi/4-QPSK, 8PSK, 16PSK, 16QAM, or 64QAM, so that the first device can select a modulation order suitable for a current service, to ensure stability and reliability of the service. Optionally, the code rate of the first data may include one or more of the following: 517, 526, 553, 567, 602, 616, 658, 666, 682.5, 711, 719, 754, 772, 797, 822, 841, 885, 873, 910, 916.5, 948, or 1. If the code rate of the first data is 1, it indicates that an original data bit is transmitted without being encoded, to further improve data transmission efficiency. In addition, for a specific value of the first MCS parameter, refer to related descriptions in "3. Reference signal density". Details are not described again. The second MCS parameter may include at least one of the following: a modulation order, a code rate, or spectral efficiency. For a specific value, refer to related descriptions in "3. Reference signal density". Details are not described again.

In a possible solution, the first MCS parameter may be indicated by information. For example, the first device sends first information. Correspondingly, the second device receives the first information. The first information indicates the first MCS parameter. Similarly, the second MCS parameter may be indicated by information. For example, the first device sends second information. Correspondingly, the second device receives the second information. The second information indicates the second MCS parameter. In this way, there is no need for the second device to determine parameters corresponding to MCSs of the first data and the second data, so that running efficiency of the second device can be improved.

Specifically, for the first MCS parameter, the second device has an MCS configuration of the first MCS parameter. The MCS configuration may be scheduled by using signaling, for example, an RRC message, a DCI message, or a MAC-CE message. An example of the MCS configuration may be shown in Table 5.

**Table 5**

| MCS index | Modulation order | Target code rate* 1024 | Frequency efficiency |
|---|---|---|---|
| 2 | 2 | 553 | 1.0080 |
| 3 | 2 | 567 | 1.1074 |
| 4 | 2 | 602 | 1.1757 |
| 5 | 2 | 616 | 1.2031 |
| 6 | 2 | 658 | 1.2851 |
| 7 | 2 | 666 | 1.3007 |
| 8 | 2 | 682.5 | 1.3330 |
| 9 | 2 | 711 | 1.3887 |
| 10 | 4 | 754 | 2.9454 |
| 11 | 4 | 772 | 3.0156 |
| 12 | 4 | 797 | 3.0428 |
| 13 | 4 | 822 | 3.2108 |
| 14 | 4 | 841 | 3.2852 |
| 15 | 4 | 873 | 3.4101 |
| 16 | 4 | 885 | 3.4570 |
| 17 | 4 | 910 | 3.5547 |
| 18 | 4 | 916.5 | 3.5801 |
| 19 | 4 | 948 | 3.7031 |
| 20 | 4 | 1 | 3.9062 |

The first information may indicate a corresponding MCS index in Table 5. In this way, the second device may traverse Table 5 based on the first information, to determine the first MCS parameter. Alternatively, the first information may directly indicate the first MCS parameter, that is, at least one of the modulation order, the target code rate, or the frequency efficiency.

For the second MCS parameter, the second device has an MCS configuration of the second MCS parameter. The MCS configuration may be scheduled by using signaling, for example, an RRC message, a DCI message, or a MAC-CE message. For an example of the MCS configuration, refer to Table 1. Details are not described again. The second information may indicate a corresponding MCS index in Table 1. In this way, the second device may traverse Table 1 based on the second information, to determine the second MCS parameter. Alternatively, the second information may directly indicate the second MCS parameter, that is, at least one of the modulation order, the target code rate, or the frequency efficiency.

The first information may be carried in one or more of the following: an RRC message, a DCI message, or a MAC-CE message, to implement signaling reusing, reduce communication overheads, and improve communication efficiency. In other words, the first MCS parameter is scheduled by using the foregoing signaling. Similarly, the second information may be carried in one or more of the following: an RRC message, a DCI message, or a MAC-CE message. In other words, the second MCS parameter is scheduled by using the foregoing signaling. In this way, signaling reusing can be implemented, communication overheads can be reduced, and communication efficiency can be improved. The foregoing messages may be different messages. In other words, the first information and the second information may be carried in different messages, and the first MCS parameter and the second MCS parameter are scheduled by using different signaling. A DCI message is used as an example. The first MCS parameter may be scheduled by using a first transport block field, for example, a field Modulation and/or coding scheme, in a first DCI message, and the second MCS parameter may be scheduled by using a first transport block field in a second DCI message. Alternatively, the foregoing messages may be a same message. In other words, the first information and the second information may be carried in one message, and the first MCS parameter and the second MCS parameter are scheduled by using same signaling. ADCI message is used as an example. The first MCS parameter may be scheduled by using a first transport block field carried in a DCI message, and the second information is scheduled by using a second transport block field carried in the DCI message. The second transport block field may be a newly added field, for example, at least one of the following fields: Modulation and/or coding scheme, New data indicator, or Redundancy version. It should be noted that at least some parameters of the first MCS parameter are different from those of the second MCS parameter, or all parameters of the first MCS parameter are different from those of the second MCS parameter. In other words, there are at least two MCS parameters in one scheduled bandwidth. For example, when the reference signal is used for phase noise compensation, the first MCS parameter may be less than the second MCS parameter, to ensure accuracy of phase noise compensation. On this basis, at least some parameters of the first MCS parameter are different from those of the second MCS parameter. A same parameter of the first MCS parameter and the second MCS parameter may be scheduled by using a first transport block field, and a different parameter of the first MCS parameter and the second MCS parameter may be scheduled by using a second transport block field. It may be understood that, that the first MCS parameter is less than the second MCS parameter is merely an example. Optionally, the first MCS parameter may alternatively be greater than or equal to the second MCS parameter.

Alternatively, in another possible solution, the first MCS parameter may be determined based on at least one of the following: the second MCS parameter, a parameter of the first data, a parameter of the first signal, or a parameter of the second signal. In other words, there is no need for the first device to additionally indicate the parameter corresponding to the MCS of the first data, to reduce signaling overheads and improve communication efficiency.

Manner 31: The first MCS parameter is determined based on the second MCS parameter.

The first MCS parameter is related to the second MCS parameter, or there is a correspondence between the first MCS parameter and the second MCS parameter. In an implementation, there is a one-to-one correspondence between the first MCS parameter and the second MCS parameter. After determining the second MCS parameter, for example, after determining the second MCS parameter based on the second information, the second device may determine the first MCS parameter based on the second MCS parameter and the one-to-one correspondence. Alternatively, in another implementation, there is a one-to-many relationship between the first MCS parameter and the second MCS parameter. For example, the MCS parameter includes an MCS index, and the one-to-many relationship may be shown in Table 6.

**Table 6**

| MCS index (MCS1) of second MCS parameter | MCS index (MCS2) of first MCS parameter |
|---|---|
| MCS1<MCS11 | No data carried in reference signal |
| MCS 11<MCS 1<MCS 12 | MCS2≤MCS21 |
| MCS12≤MCS1<MCS13 | MCS2≤MCS22 |
| ... | ... |
| MCS1n≤MCS1<MCS1n | MCS2≤MCS2(n-1) |
| MCS1n≤MCS1 | MCS2≤MCS2n |

It can be learned that when the MCS index (namely, MCS1) of the second MCS parameter is greater than or equal to MCS11, a plurality of MCS indexes (namely, MCS2) of the first MCS parameter are corresponding to MCS 1. For example, when MCS11≤MCS1<MCS12, a value range of MCS2 corresponding to MCS1 is as follows: MCS2≤MCS21. In other words, there may be a plurality of MCS2s. After determining the second MCS parameter, for example, after determining the second MCS parameter based on the second information, the second device may determine a plurality of first MCS parameters based on the second MCS parameter and the one-to-many relationship. Optionally, when there is the one-to-many relationship between the first MCS parameter and the second MCS parameter, the second device may determine a to-be-used first MCS parameter from the plurality of first MCS parameters based on indication information from a higher layer of a network, for example, a core network element.

Optionally, the correspondence between the first MCS parameter and the second MCS parameter may be configured by using signaling, for example, an RRC message, a MAC-CE message, or a DCI message. For example, all correspondences between the first MCS parameter and the second MCS parameter are configured by using RRC signaling (or MAC-CE signaling). For another example, a part of the correspondence between the first MCS parameter and the second MCS parameter is configured by using RRC signaling (or MAC-CE signaling), and another part of the correspondence between the first MCS parameter and the second MCS parameter is configured by using DCI. It may be understood that the correspondence between the first MCS parameter and the second MCS parameter configured by using signaling is merely an example, which constitutes no limitation. For example, when the first MCS parameter is less than the second MCS parameter, the first MCS parameter may be further configured, by using signaling, to be K MCS levels less than the second MCS parameter, or the second MCS parameter may be configured, by using signaling, to be K MCS levels greater than the first MCS parameter, where K is a positive integer. In an example in which the MCS parameter includes an MCS index, K may be configured, by using signaling, to be equal to 2. In this way, after determining that the MCS index of the second MCS parameter is 7, the second device may determine that the MCS index of the first MCS parameter is 5 because the MCS index of the second MCS parameter is 7 and K is equal to 2.

It should be noted that an example in which the MCS parameter includes the MCS index is used above, and the MCS index may be replaced with a target code rate, a modulation order, or spectral efficiency. For example, the MCS index in Table 6 is replaced with a modulation order, and when the second MCS parameter is 16QAM, the first MCS parameter is QPSK. When the second MCS parameter is 64QAM, the first MCS parameter is 16QAM or 8PSK.

It should be further noted that an example in which the first MCS parameter is determined based on the second MCS parameter is used above, which constitutes no limitation. Alternatively, the second MCS parameter may be determined based on the first MCS parameter, and a specific implementation principle is similar to that the first MCS parameter is determined based on the second MCS parameter. Reference may be made to related descriptions in "Manner 31", and details are not described again.

Manner 32: The first MCS parameter is determined based on at least one of the following: a parameter of the first data, a parameter of the first signal, or a parameter of the second signal.

The parameter of the first data may be a quantity of bits of the first data. The parameter of the first signal may include one or more of the following: a frequency domain density of the first signal, a time domain density of the first signal, a power of the first signal, a quantity of first signals, or a quantity of first signal blocks, where the first signal block includes the first signal, to ensure that the second device can accurately determine the parameter corresponding to the MCS of the first data. The parameter of the second signal may include one or more of the following: a quantity of resources corresponding to the second signal or a power of the second signal, to ensure that the second device can accurately determine the parameter corresponding to the MCS of the first data. For specific implementation of the frequency domain density of the first signal, the time domain density of the first signal, the quantity of first signals, and the quantity of first signal blocks, refer to related descriptions in "3. Reference signal density". Details are not described again. The power of the first signal may be twice a power of an outermost constellation point of the second signal. In this case, the first signal and the second signal may have a same MCS, for example, the first MCS parameter is the same as the second MSC parameter. In frequency domain, the quantity of resources corresponding to the second signal may indicate a bandwidth, for example, a bandwidth scheduled by using a DCI message. Alternatively, in time domain, the quantity of resources corresponding to the second signal may indicate a length of duration, for example, one or more slots, or one or more symbols. For example, the first MCS parameter includes spectral efficiency of the first data. Spectral efficiency of the first signal may be determined based on the quantity of first signals and a modulation order of the first signal. In an implementation, the quantity of first signals may be determined based on the following: the quantity of resources corresponding to the second signal, the quantity of bits of the first data, and the frequency domain density of the first signal. For example, in frequency domain, the bandwidth indicated by the quantity of resources corresponding to the second data is 60 RBs, and there is an RE carrying one first signal on every two RBs (that is, the frequency domain density of the first signal is 2). In time domain, the quantity of resources corresponding to the second signal indicates one slot (one slot includes 14 symbols). In this case, there are 60/2*14=420 REs that carry the first signal in the entire slot, that is, there are 420 first signals. If the first data has 100 bits, and a modulation scheme of the first signal is QPSK (that is, one RE may transmit information of two bits), the spectral efficiency of the first signal is 100/(420*2)=0.119.

Optionally, when the quantity of first signals is less than a first threshold, or the quantity of bits of the first data is less than a second threshold, the first data may be transmitted by using a sequence, that is, the first data is not encoded. Each first signal sequence may indicate one piece of first data. Optionally, when the quantity of first signals is greater than or equal to the first threshold, or the quantity of bits of the first data is greater than or equal to the second threshold, the first data may be transmitted at a high code rate. In this case, because the quantity of bits of the first data is large, transmission at a high code rate brings a high coding gain.

Optionally, if the first MCS parameter is determined when the power of the first signal is the same as the power of the second signal, the first MCS parameter may be increased when the power of the first signal is increased. For example, if the power of the first signal is increased by M times, the first MCS parameter may be increased by N times. In an example in which the first MCS parameter includes an MCS index of the first data, and M is equal to 2 and N is equal to 3, when the power of the first signal is increased by two times, the MCS index of the first data may be increased by three levels. One MCS index may be understood as one level. Alternatively, in Table 6, MCS11, MCS12, MCS13, ..., and MCS1n each are one level, and MCS11 is one level lower than MCS12. Values of M and N may be configured by using RRC signaling (or MAC-CE signaling), or may be agreed in a protocol. This is not limited in embodiments of this application.

In conclusion, it can be learned from the method shown in FIG. 13 that, on the basis that the first data is carried in the first signal and the second data is carried in the second signal, the parameter corresponding to the MCS of the first data is different from the parameter corresponding to the MCS of the second data, indicating that one of the first signal and the second signal is a reference signal and the other is a data signal, so that data is transmitted based on the reference signal, and data transmission efficiency and spectral efficiency are improved.

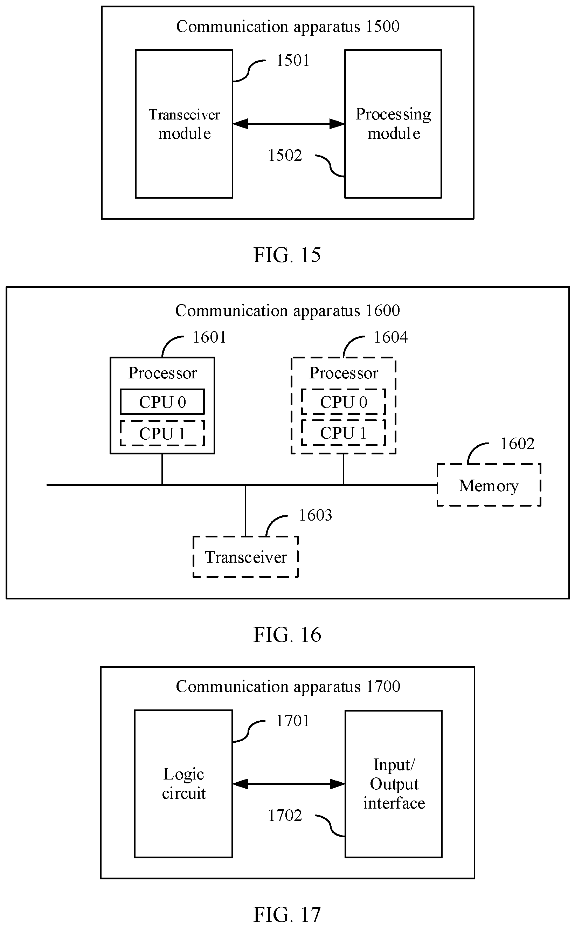

The communication method according to embodiments of this application is described in detail with reference to FIG. 13 and FIG. 14. A communication apparatus configured to perform the communication method according to embodiments of this application is described below in detail with reference to FIG. 15 to FIG. 8.

For example, FIG. 15 is a schematic diagram 1 of a structure of a communication apparatus according to an embodiment of this application. As shown in FIG. 15, the communication apparatus 1500 includes a transceiver module 1501 and a processing module 1502. For ease of description, FIG. 15 shows only main components of the communication apparatus.

In an embodiment, the communication apparatus 1500 is applicable to the communication system shown in FIG. 12, and performs a function of the first device in the method shown in FIG. 13.

The processing module 1502 is configured to obtain a first signal and a second signal based on OQAM. The transceiver module 1501 is configured to send the first signal and the second signal. First data is carried in the first signal, second data is carried in the second signal, and a parameter corresponding to an MCS of the first data is different from a parameter corresponding to an MCS of the second data.

In a possible design solution, the first data is carried in the first signal based on a time domain position of the first signal. Optionally, the first data may alternatively be carried in the first signal based on at least one of the following: a polarity or an amplitude of the first signal.

In a possible design solution, the parameter corresponding to the MCS of the first data may be determined based on at least one of the following: a parameter of the first data, a parameter of the first signal, a parameter of the second signal, or the parameter corresponding to the MCS of the second data.

Optionally, the parameter corresponding to the MCS of the first data may be less than the parameter corresponding to the MCS of the second data.

Optionally, the parameter of the first signal may include one or more of the following: a frequency domain density of the first signal, a time domain density of the first signal, a power of the first signal, a quantity of first signals, or a quantity of first signal blocks, where the first signal block includes the first signal.

Optionally, the parameter of the second signal may include one or more of the following: a quantity of resources corresponding to the second signal or a power of the second signal.

In a possible design solution, the parameter corresponding to the MCS of the first data includes at least one of the following: a modulation order, a code rate, or spectral efficiency.

Optionally, the modulation order may include one or more of the following: BPSK, QPSK, 8PSK, or 16QAM.

Optionally, the code rate may include 1.

In a possible design solution, the transceiver module 1501 is further configured to send first information, and the first information indicates the parameter corresponding to the MCS of the first data.

Optionally, the first information is carried in one or more of the following: an RRC message, a DCI message, or a MAC-CE message.

Optionally, the transceiver module 1501 may further include a sending module and a receiving module (not shown in FIG. 15). The sending module is configured to implement a sending function of the communication apparatus 1500, and the receiving module is configured to implement a receiving function of the communication apparatus 1500.

Optionally, the communication apparatus 1500 may further include a storage module (not shown in FIG. 15), and the storage module stores a program or instructions. When the processing module executes the program or the instructions, the communication apparatus 1500 is enabled to perform a function of the first device in the method shown in FIG. 13.

It should be understood that the processing module in the communication apparatus 1500 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1500 may be a terminal or a network device, may be a chip (system) or another part or component that can be disposed in a terminal or a network device, or may be an apparatus that includes a terminal or a network device. This is not limited in this application.

In addition, for technical effects of the communication apparatus 1500, refer to corresponding technical effects in the method shown in FIG. 13. Details are not described herein again.

In another embodiment, the communication apparatus 1500 is applicable to the communication system shown in FIG. 12, and performs a function of the second device in the method shown in FIG. 13.

The transceiver module 1501 is configured to receive a first signal and a second signal. The processing module 1502 is configured to demodulate the first signal and the second signal. The first signal and the second signal are signals obtained based on OQAM, first data is carried in the first signal, second data is carried in the second signal, and a parameter corresponding to an MCS of the first data is different from a parameter corresponding to an MCS of the second data.

In a possible design solution, the first data is carried in the first signal based on a time domain position of the first signal. Optionally, the first data may alternatively be carried in the first signal based on at least one of the following: a polarity or an amplitude of the first signal.

In a possible design solution, the parameter corresponding to the MCS of the first data may be determined based on at least one of the following: a parameter of the first data, a parameter of the first signal, a parameter of the second signal, or the parameter corresponding to the MCS of the second data.

Optionally, the parameter corresponding to the MCS of the first data may be less than the parameter corresponding to the MCS of the second data.

Optionally, the parameter of the first signal may include one or more of the following: a frequency domain density of the first signal, a time domain density of the first signal, a power of the first signal, a quantity of first signals, or a quantity of first signal blocks, where the first signal block includes the first signal.

Optionally, the parameter of the second signal may include one or more of the following: a quantity of resources corresponding to the second signal or a power of the second signal.

In a possible design solution, the parameter corresponding to the MCS of the first data includes at least one of the following: a modulation order, a code rate, or spectral efficiency.

Optionally, the modulation order may include one or more of the following: BPSK, QPSK, 8PSK, or 16QAM.

Optionally, the code rate may include 1.

In a possible design solution, the transceiver module 1501 is further configured to receive first information, and the first information indicates the parameter corresponding to the MCS of the first data.

Optionally, the first information is carried in one or more of the following: an RRC message, a DCI message, or a MAC-CE message.

Optionally, the transceiver module 1501 may further include a sending module and a receiving module (not shown in FIG. 15). The sending module is configured to implement a sending function of the communication apparatus 1500, and the receiving module is configured to implement a receiving function of the communication apparatus 1500.

Optionally, the communication apparatus 1500 may further include a storage module (not shown in FIG. 15), and the storage module stores a program or instructions. When the processing module executes the program or the instructions, the communication apparatus 1500 is enabled to perform a function of the second device in the method shown in FIG. 13.

It should be understood that the processing module in the communication apparatus 1500 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1500 may be a terminal or a network device, may be a chip (system) or another part or component that can be disposed in a terminal or a network device, or may be an apparatus that includes a terminal or a network device. This is not limited in this application.

In addition, for technical effects of the communication apparatus 1500, refer to corresponding technical effects in the method shown in FIG. 13. Details are not described herein again.

For example, FIG. 16 is a schematic diagram 2 of a structure of a communication apparatus according to an embodiment of this application. The communication apparatus may be a terminal device or a network device, or may be a chip (system) or another part or component that can be disposed in a terminal device or a network device. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected to the memory 1602 and the transceiver 1603 through a communication bus.

Various components of the communication apparatus 1600 are described specifically with reference to FIG. 16.

The processor 1601 is a control center of the communication apparatus 1600, and may be a processor, may be a collective name of a plurality of processing elements, or may be referred to as a logic circuit. For example, the processor 1601 may be one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

Optionally, the processor 1601 may perform various functions of the communication apparatus 1600 by running or executing a software program stored in the memory 1602 and invoking data stored in the memory 1602.

During specific implementation, in an embodiment, the processor 1601 may include one or more CPUs, for example, a CPU 0 and a CPU 1 shown in FIG. 16.

During specific implementation, in an embodiment, the communication apparatus 1600 may alternatively include a plurality of processors, for example, the processor 1601 and a processor 1604 shown in FIG. 1. Each of the processors may be a single-CPU (single-CPU) processor or may be a multi-CPU (multi-CPU) processor. The processor herein may be one or more devices, circuits, and/or processing cores configured to process data (for example, computer program instructions).

The memory 1602 is configured to store a software program for performing the solutions of this application, and is controlled by the processor 1601, so that the method shown in FIG. 13 is performed.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1602 may be integrated with the processor 1601, or may exist independently, and is coupled to the processor 1601 through an interface circuit or an input/output interface (not shown in FIG. 16) of the communication apparatus 1600. This is not specifically limited in embodiments of this application.

The transceiver 1603 is configured to communicate with another communication apparatus. For example, the communication apparatus 1600 is a terminal, and the transceiver 1603 may be configured to communicate with a network device or communicate with another terminal device. For another example, the communication apparatus 1600 is a network device, and the transceiver 1603 may be configured to communicate with a terminal or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in embodiments of this application.

It should be noted that the structure of the communication apparatus 1600 shown in FIG. 16 does not constitute a limitation on the communication apparatus. An actual communication apparatus may include more or fewer components than those shown in the figure, combine some components, or have different component arrangements.

In addition, for technical effects of the communication apparatus 1600, refer to the technical effects of the communication method in the foregoing method embodiments. Details are not described herein again.

For example, FIG. 17 is a schematic diagram 3 of a structure of a communication apparatus according to an embodiment of this application. The communication apparatus may be a terminal device or a network device, or may be a chip (system) or another part or component that can be disposed in a terminal device or a network device. As shown in FIG. 17, the communication apparatus 1700 may include a logic circuit 1701 and an input/output interface 1702. The input/output interface 1702 is configured to receive code instructions and transmit the code instructions to the logic circuit 1701. The logic circuit 1701 is configured to run the code instructions to perform the foregoing method.

In addition, for technical effects of the communication apparatus 1700, refer to the technical effects of the communication method in the foregoing method embodiments. Details are not described herein again.

An embodiment of this application provides a communication system. The communication system includes one or more terminals and one or more network devices described above.

It should be understood that in embodiments of this application, the processor may be a CPU, or the processor may be another general-purpose processor, a DSP, an ASIC, a field programmable gate array FPGA or another programmable logic device, a discrete gate or a transistor logic device, a discrete hardware component, or the like. The general-purpose processor may be a microprocessor, or the processor may be any conventional processor, or the like.

It should be understood that in embodiments of this application, the memory may be a volatile memory or a nonvolatile memory, or may include both a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, all or some of the foregoing embodiments may be implemented in a form of computer program product. The computer program product includes one or more computer instructions or computer programs. When the computer instructions or the computer programs or instructions are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium that can be accessed by a computer, or a data storage device, for example, a server or a data center integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular or plural items (pieces). For example, "at least one of a, b, or c" may indicate: a, b, c, a and b, a and c, b and c, or a, b, and c, where a, b, and c may be singular or plural.

It should be understood that, in embodiments of this application, sequence numbers of the foregoing processes do not mean execution sequences. The execution sequences of the processes should be determined based on functions and internal logic of the processes, and shall not constitute any limitation on implementation processes of embodiments of this application.

A person of ordinary skill in the art may be aware that, units and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it shall not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between apparatuses or units may be implemented in electrical, mechanical, or other forms.

Units described as separate parts may or may not be physically separate, and parts displayed as units may or may not be physical units, may be located in one position, or may be distributed on a plurality of network units. Some or all of the units may be selected according to an actual requirement to achieve objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially or a part contributing to a conventional technology or some of the technical solutions may be implemented in a form of software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   obtaining, by a first device, a first signal and a second signal based on offset quadrature amplitude modulation OQAM, wherein first data is carried in the first signal, second data is carried in the second signal, and a parameter corresponding to a modulation and coding scheme MCS of the first data is different from a parameter corresponding to an MCS of the second data; and
   sending, by the first device, the first signal and the second signal.

2. The method according to claim 1, wherein the method further comprises:
   sending, by the first device, first information, wherein the first information indicates the parameter corresponding to the MCS of the first data.

3. A communication method, wherein the method comprises:

   receiving, by a second device, a first signal and a second signal, wherein the first signal and the second signal are signals obtained based on offset quadrature amplitude modulation OQAM, first data is carried in the first signal, second data is carried in the second signal, and a parameter corresponding to a modulation and coding scheme MCS of the first data is different from a parameter corresponding to an MCS of the second data; and
   demodulating, by the second device, the first signal and the second signal.

4. The method according to claim 1 or 3, wherein the first data is carried in the first signal based on a time domain position of the first signal.

5. The method according to claim 3, wherein the method further comprises:
   receiving, by the second device, first information, wherein the first information indicates the parameter corresponding to the MCS of the first data.

6. The method according to any one of claims 1 to 5, wherein the parameter corresponding to the MCS of the first data is determined based on at least one of the following: a parameter of the first data, a parameter of the first signal, a parameter of the second signal, or the parameter corresponding to the MCS of the second data.

7. The method according to claim 6, wherein the parameter corresponding to the MCS of the first data is less than the parameter corresponding to the MCS of the second data.

8. The method according to claim 6, wherein the parameter of the first signal comprises one or more of the following: a frequency domain density of the first signal, a time domain density of the first signal, a power of the first signal, a quantity of the first signals, or a quantity of first signal blocks, wherein the first signal block comprises the first signal.

9. The method according to claim 6, wherein the parameter of the second signal comprises one or more of the following:

a quantity of resources corresponding to the second signal or a power of the second signal.

10. The method according to any one of claims 1 to 9, wherein the parameter corresponding to the MCS of the first data comprises at least one of the following: a modulation order, a code rate, or spectral efficiency.

11. A communication apparatus, comprising a processing module and a transceiver module, wherein

the processing module is configured to obtain a first signal and a second signal based on offset quadrature amplitude modulation OQAM, wherein first data is carried in the first signal, second data is carried in the second signal, and a parameter corresponding to a modulation and coding scheme MCS of the first data is different from a parameter corresponding to an MCS of the second data; and
the transceiver module is configured to send the first signal and the second signal.

12. The apparatus according to claim 11, wherein the transceiver module is further configured to send first information, and the first information indicates the parameter corresponding to the MCS of the first data.

13. A communication apparatus, comprising a processing module and a transceiver module, wherein

the transceiver module is configured to receive a first signal and a second signal, wherein the first signal and the second signal are signals obtained based on offset quadrature amplitude modulation OQAM, first data is carried in the first signal, second data is carried in the second signal, and a parameter corresponding to a modulation and coding scheme MCS of the first data is different from a parameter corresponding to an MCS of the second data; and
the processing module is configured to demodulate the first signal and the second signal.

14. The apparatus according to claim 11 or 13, wherein the first data is carried in the first signal based on a time domain position of the first signal.

15. The apparatus according to claim 13, wherein the transceiver module is further configured to receive first information, and the first information indicates the parameter corresponding to the MCS of the first data.

16. The apparatus according to any one of claims 11 to 15, wherein the parameter corresponding to the MCS of the first data is determined based on at least one of the following: a parameter of the first data, a parameter of the first signal, a parameter of the second signal, or the parameter corresponding to the MCS of the second data.

17. The apparatus according to claim 16, wherein the parameter corresponding to the MCS of the first data is less than the parameter corresponding to the MCS of the second data.

18. The apparatus according to claim 16, wherein the parameter of the first signal comprises one or more of the following: a frequency domain density of the first signal, a time domain density of the first signal, a power of the first signal, a quantity of the first signals, or a quantity of first signal blocks, wherein the first signal block comprises the first signal.

19. The apparatus according to claim 16, wherein the parameter of the second signal comprises one or more of the following: a quantity of resources corresponding to the second signal or a power of the second signal.

20. The apparatus according to any one of claims 12 to 19, wherein the parameter corresponding to the MCS of the first data comprises at least one of the following: a modulation order, a code rate, or spectral efficiency.

21. A communication apparatus, comprising a processor, wherein
the processor is configured to perform the method according to any one of claims 1 to 10.

22. A communication apparatus, comprising a logic circuit and an input/output interface, wherein

the input/output interface is configured to receive code instructions and transmit the code instructions to the logic circuit; and
the logic circuit is configured to run the code instructions to perform the method according to any one of claims 1 to 10.

23. A computer-readable storage medium, wherein the computer-readable storage medium comprises a computer program or instructions, and when the computer program or the instructions are run on a computer, the computer is enabled to perform the method according to any one of claims 1 to 10.

24. A computer program product, wherein the computer program product comprises a computer program or instructions, and when the computer program or the instructions are run on a computer, the computer is enabled to perform the method according to any one of claims 1 to 10.

PTPS

Data

2*2

First group of PTPSs+data

Second group of PTPSs+data

2*4

First group of PTPSs+data

Second group of PTPSs+data

4*2

First group of PTPSs+data

Second group of PTPSs+data

Third group of PTPSs+data

Fourth group of PTPSs+data

4*4

First group of PTPSs+data

Second group of PTPSs+data

Third group of PTPSs+data

Fourth group of PTPSs+data

8*4

First group of PTPSs+data

Second group of PTPSs+data

Third group of PTPSs+data

Fourth group of PTPSs+data

Fifth group of PTPSs+data

Sixth group of PTPSs+data

Seventh group of PTPSs+data

Eighth group of PTPSs+data

FIG. 1

FIG. 2

FIG. 3

FIG. 4

```
┌────────────┐     ┌─────────────┐     ┌─────────────┐                    ┌─────────────┐     ┌──────────────────┐
│ Modulation │──┬─▶│ Real signal │────▶│ Upsampling  │──────────────────▶│ DFT and     │────▶│ Truncated freq-  │
└────────────┘  │  └─────────────┘     └─────────────┘                    │ upsampling  │     │ uency-domain     │
                │                                                         └─────────────┘     │ filtering        │
                │                                                                             └──────────────────┘
                │  ┌─────────────┐     ┌─────────────┐     ┌─────────────┐                             │
                └─▶│ Imaginary   │────▶│ Upsampling  │────▶│ Delaying    │────┐        ┌──────┐     ┌──────────────────┐
                   │ signal      │     └─────────────┘     │ for T/2     │    │        │ IFFT │◀────│ Subcarrier       │
                   └─────────────┘                         └─────────────┘    │        └──────┘     │ mapping          │
                                                                              │                     └──────────────────┘
                                                                              └─────────────────────────▲
```

a

```
┌──────┐     ┌──────────────┐     ┌──────────────┐     ┌──────────────┐     ┌──────────────┐     ┌──────┐
│ FFT  │────▶│ Subcarrier   │────▶│ Subcarrier   │────▶│ Channel      │────▶│ Frequency-   │────▶│ IFFT │
└──────┘     │ mapping      │     │ demapping    │     │ removal      │     │ domain       │     └──────┘
             └──────────────┘     └──────────────┘     └──────────────┘     │ filtering    │
                                                                            └──────────────┘
```

b

FIG. 5

| Bandwidth of 100 | Bandwidth of 60 | Bandwidth of 60 |
|---|---|---|

| Frequency-domain complex signal | → | Frequency-domain filter | → | Frequency-domain filter whose bandwidth is truncated |
|---|---|---|---|---|

Truncation

| | Frequency-domain complex signal | |
|---|---|---|

FIG. 6

FIG. 7

FIG. 8

FIG. 9

FIG. 10

Amplitude    Imaginary    jY1    Q2    Q4
             signal position

             Real signal        Q1    Q3    X1
             position

                                                                    Time domain
                                                                    position

a

Real signal
position          | Q1 | Q3 | X1 |  i path

UE

Imaginary         | J1 | Q2 | Q4 |  j path
signal position

b

FIG. 11

Terminal                    Network device

FIG. 12

| First device | | Second device |
|---|---|---|

S1301: Obtain a first signal and a
second signal based on OQAM

S1302: The first signal and the second signal

S1303: Demodulate the first
signal and the second signal

FIG. 13

Reference Reference
signal signal

Real signal | Q1 | Q3 | i path
position

Imaginary | Q2 | Q4 | j path
signal
position
Redundant Redundant
signal signal

a

Redundant Reference
signal signal

Real signal | Q1 | Q3 | i path
position

Imaginary | Q2 | Q4 | j path
signal
position
Redundant Reference
signal signal

d

Redundant Redundant
signal signal

Real signal | Q1 | Q3 | i path
position

Imaginary | Q2 | Q4 | j path
signal
position
Reference Reference
signal signal

b

Redundant Reference
signal signal

Real signal | Q1 | Q3 | i path
position

Imaginary | Q2 | Q4 | j path
signal
position
Reference Redundant
signal signal

e

Reference Redundant
signal signal

Real signal | Q1 | Q3 | i path
position

Imaginary | Q2 | Q4 | j path
signal
position
Reference Redundant
signal signal

c

Reference Redundant
signal signal

Real signal | Q1 | Q3 | i path
position

Imaginary | Q2 | Q4 | j path
signal
position
Redundant Reference
signal signal

f

FIG. 14

Communication apparatus 1500

Transceiver module

1501

◀──────▶

1502

Processing module

**FIG. 15**

Communication apparatus 1600

1601

Processor

CPU 0

CPU 1

1604

Processor

CPU 0

CPU 1

1602

Memory

1603

Transceiver

**FIG. 16**

Communication apparatus 1700

Logic circuit

1701

◀──────▶

1702

Input/ Output interface

**FIG. 17**

## INTERNATIONAL SEARCH REPORT

| International application No. |
|---|
| **PCT/CN2022/139956** |

**A.    CLASSIFICATION OF SUBJECT MATTER**

H04L5/00(2006.01)i;H04L1/00(2006.01)i

According to International Patent Classification (IPC) or to both national classification and IPC

**B.    FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, ENTXTC, CNKI, 3GPP: 参考信号, 第一, 第二, 调制和编码方案, 正交幅度调制, 数据, 参考信号, PTRS, first, second, MCS, QAM, data, reference signal

**C.    DOCUMENTS CONSIDERED TO BE RELEVANT**

| Category* | Citation of document, with indication, where appropriate, of the relevant passages | Relevant to claim No. |
|---|---|---|
| X | US 2021351889 A1 (QUALCOMM INC.) 11 November 2021 (2021-11-11) description, paragraphs 0044-0153 | 1-24 |
| A | WO 2020138983 A1 (LG ELECTRONICS INC.) 02 July 2020 (2020-07-02) entire document | 1-24 |
| A | WO 2021189216 A1 (HUAWEI TECHNOGOLY CO., LTD.) 30 September 2021 (2021-09-30) entire document | 1-24 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 March 2023** | **17 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| --- |
| **PCT/CN2022/139956** |

| Patent document cited in search report | | | Publication date (day/month/year) | Patent family member(s) | Publication date (day/month/year) |
| --- | --- | --- | --- | --- | --- |
| US | 2021351889 | A1 | 11 November 2021 | None | |
| WO | 2020138983 | A1 | 02 July 2020 | None | |
| WO | 2021189216 | A1 | 30 September 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111567396